# NEUE EUROPÄISCHE PATENTSCHRIFT

(11) **EP 2 639 165 B2**
(45) Veröffentlichungstag und Bekanntmachung des Hinweises auf die Entscheidung über den Einspruch: **18.08.2021**
(45) Hinweis auf die Patenterteilung: 04.03.2015
(21) Anmeldenummer: 13150014.2
(22) Anmeldetag: 02.01.2013
(51) Int. Cl.: B65B 35/40, B65G 47/08, B65G 47/84

(54) **Verfahren und Vorrichtung zur Übergabe von Artikellagen zwischen benachbarten Modulen**
Method and apparatus for transferring layers of articles between neighbouring modules
Procédé et dispositif pour transférer des couches d'articles entre des modules voisines

(30) Priorität: 14.03.2012 DE 102012204013
(43) Veröffentlichungstag der Anmeldung: 18.09.2013
(73) Patentinhaber: Krones Aktiengesellschaft, 93073 Neutraubling (DE)
(72) Erfinder: Beer, Erhard, 93073 Neutraubling (DE); Osterhammer, Martin, 93073 Neutraubling (DE)
(74) Vertreter: Grünecker Patent- und Rechtsanwälte PartG mbB

(56) Entgegenhaltungen:
- EP-A1- 1 106 540
- EP-A1- 1 923 314
- EP-A1- 2 364 916
- EP-A2- 0 170 613
- WO-A1-88/05417
- WO-A2-2010/100545
- DE-A1- 4 207 725
- DE-A1-102005 051 027
- FR-A1- 2 259 750
- GB-A- 1 150 300
- US-A- 4 055 257
- US-A- 4 934 509
- US-B1- 6 182 814
- Service-Auftrag Nr. 500655 vom 23.03.2015
- CD mit einem Video
- Zeichnung 610-13038-8 (12 Mai 2003)
- vergrösserte Ausschnittsdarstellung aus der Zeichnung nach Anlage GLP2
- Schnitt entlang der Linie A-A aus der Zeichnung nach Anlage GLP3
- Zeichnung A 06187-020-E01-3 (18 Februar 2003)
- 3. Ersatz für Auftragsbestätigung Nr. 12608/02'' vom 05.02.2003
- Rechnung Nr. 050008 vom 14.05.2003

## Beschreibung

Die vorliegende Erfindung betrifft ein Verfahren zur horizontalen Verschiebung einer Artikelgruppe mittels wenigstens eines Schubbalkens mit den Merkmalen des unabhängigen Anspruches 1. Die Erfindung betrifft zudem eine entsprechende Vorrichtung mit den Merkmalen des unabhängigen Anspruchs 7.

Werden Gruppen von Artikeln mittels Schubbalken oder anderer geeigneter Überschubmittel oder auch mit beweglichen Auflageebenen in horizontaler Richtung in eine definierte Position verschoben, so besteht je nach Geschwindigkeit der Verschiebebewegung beim Erreichen der Endposition ein gewisses Risiko, dass sich die Artikel innerhalb der Gruppe relativ zueinander bewegen. Unter ungünstigen Umständen, insbesondere bei einer starken Verzögerung am Ende der Überschubbewegung, können sogar einzelne Artikel umfallen. In aller Regel besteht für die in Überschubrichtung zuvorderst stehenden Artikel das größte Risiko für ein Umfallen oder Verrutschen, so dass das zuvor bestehende Lagenbild nicht in der gewünschten Weise aufrechterhalten werden kann. Aus diesem Grund sind die realisierbaren Überschubgeschwindigkeiten begrenzt. Insbesondere vor dem Erreichen der gewünschten Endposition ist die Geschwindigkeit ggf. moderat zu reduzieren, um eine zu plötzliche Verzögerung mit dem Risiko der Auflösung des Lagenbildes zu vermeiden. Bei einem Überschub mittels die Artikel umgebenden Rahmens müssen weitere Förder- oder Handhabungselemente wie bspw. Hubwerke solange warten, bis der Rahmen wieder zurückgefahren ist. Dadurch kann der formschlüssige Überschub nicht zur Erhöhung der Gesamtleistung eines Palettierers o. dgl. genutzt werden.

Die DE 603 07 332 T2 offenbart eine Vorrichtung zum Transportieren und Einschachteln einer Gruppe von Gegenständen, die während der Förderung mittels einer Halteeinrichtung in einer vorbestimmten Position gehalten werden, so dass die Gegenstände als Gruppe stabil befördert werden können. Die Gegenstände sollen dadurch während ihrer Förderung und Übergabe an eine weitere Verpackungseinheit insbesondere am Umfallen gehindert werden.

Ein Verfahren zum Bilden, Halten, Trennen und Transportieren von Stapeln hinter einer Ablegevorrichtung ist weiterhin aus der DE 41 17 434 A1 bekannt. Mehrere Stapelstützen sorgen für die Stabilität der Stapel und folgen zu diesem Zweck jeweils den Bewegungsverläufen der Stapel.

Die DE 44 35 981 A1 zeigt eine Einrichtung zum Zuführen von zu verpackenden Gegenständen zu einer Verpackungsmaschine. Die Gegenstände werden entlang einer Transportstrecke befördert und mittels Schiebereinrichtungen in die Verpackungsmaschine überführt.

Die FR 2 259 750 A1 zeigt eine Verpackungsmaschine, in welcher die zu verpackenden Artikel eines Artikelstroms auf einem ersten Transportband mittels endlos umlaufender Einteilstäbe gruppiert und aus etwas erhöhter Position in ein auf einem zweiten Transportband von unten zugeführtes Tray überschoben werden. An Überschubposition angeordnete, ebenfalls endlos umlaufende Anlagebalken sollen die zu überführenden Artikel solange abstützen, bis die jeweilige Artikelgruppe vollständig im Tray abgestellt wurde.

Aus der WO 2010/100545 A2 ist eine Vorrichtung zum horizontalen Überführen von Artikeln von einem ersten auf ein zweites Transportband bekannt, bei welchem die Überschubelemente abwechselnd die Funktion von Schub- und Anlagebalken übernehmen.

Die US 4 055 257 A beschreibt eine Stapelvorrichtung für Kartons, bestehend aus einem dreiteiligen Gestell mit an seitlich umlaufenden Förderketten beweglich ausgebildeten Rollböden. Eine extern angebrachte Überschubvorrichtung befördert den zu stapelnden Karton auf einen Rollboden, auf welchem dieser bis zu einem ortsfest angebrachten Anschlagbalken weiterbewegt wird, an welchem der Karton anliegt, während der Rollboden unter dem Karton hervorbewegt wird.

Die GB 1 150 300 A handelt von einer Palettiervorrichtung, bei welcher Paletten von einer seitlich an einem Gestellrahmen angebrachten ersten Hubeinrichtung mittels eines Schiebebalkens auf eine an der gegenüberliegenden Seite des Gestellrahmens angebrachte, zweite Hubeinrichtung überschoben werden.

Ein Ziel der vorliegenden Erfindung besteht darin, ein universell und für unterschiedliche Arten von zu transportierenden Artikeln einsetzbares Verfahren zum Transport und Überschub von Artikelgruppen in vorgegebener Formation zur Verfügung zu stellen, das mit hoher Überschubgeschwindigkeit ablaufen kann, ohne dass dabei die Artikelformation beeinträchtigt wird. Ein weiteres Ziel der Erfindung besteht darin, eine entsprechende Fördervorrichtung zur Verfügung zu stellen, die insbesondere für die Palettierung und/oder Depalettierung von Artikelgruppen in vorgegebener Formation geeignet sein soll.

Die genannten Ziele werden mit den Gegenständen der unabhängigen Ansprüche erreicht. Weitere vorteilhafte Ausgestaltungen werden durch die Unteransprüche beschrieben. So wird zur Erreichung des erstgenannten Ziels ein Verfahren zur horizontalen Verschiebung einer Artikelgruppe aus einer ersten Lage und/oder aus einer Förderbewegung heraus mittels wenigstens eines Schubbalkens in eine zweite Ruhelage vorgeschlagen. Dieser für die Verschiebung der Artikelgruppe zumindest abschnittsweise verantwortliche Schubbalken greift dabei an den in Bezug auf die Förder- bzw. Vorschubbewegung rückseits der Artikelgruppe befindlichen Artikeln an und verschiebt dadurch die gesamte Artikelgruppe, die in diesem Förderabschnitt sinnvollerweise seitlich geführt ist. Durch die rückseitige Einwirkung des Schubbalkens und die seitlichen Führungen können Relativpositionen einer die Artikelgruppe bildenden Mehrzahl von Artikeln relativ zueinander weitgehend beibehalten werden; d.h. das Lagenbild der verschobenen Artikelgruppe bleibt dabei weitgehend aufrechterhalten. Bei dem erfindungsgemäßen Verfahren ist zudem vorgesehen, dass ein zumindest temporär den in Förderrichtung frontseitig befindlichen Artikeln zugeordneter Anlagebalken der Artikelgruppe zumindest kurz vor oder bei Erreichen der Ruhelage mit geringem Abstand zu den vordersten Artikeln vorauseilt. Diese erfindungsgemäße Steuerung des Anlagebalkens in Abhängigkeit von der Förderbewegung der Artikelgruppe umfasst sowohl eine Bewegungssteuerung, bei welcher der Anlagebalken der Artikelgruppe in geringem Abstand vorauseilt. Darüber hinaus umfasst die Erfindung eine weitere Variante der Bewegungssteuerung, bei welcher der Anlagebalken die Artikelgruppe zwar zunächst während ihres Verzögerungsvorganges stabilisiert, sich jedoch unmittelbar vor Erreichen des Stillstandes wieder von der Artikelgruppe entfernt. Dies kann damit zusammenhängen, dass die Verzögerung der Artikelgruppe nicht gleichmäßig erfolgt, sondern kurz vor Erreichen der Ruhelage allmählich sanfter wird, um einen plötzlichen, ruckartigen Stopp der Artikelgruppe zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikelgruppe mit dem Anlagebalken unmittelbar vor dem Stillstand nicht mehr erforderlich, so dass dieser bereits wieder in beschleunigter Bewegung von der Artikelgruppe entfernt werden kann.

Auf die beschriebene Weise kann verhindert werden, dass die zuvorderst stehenden Artikel der verschobenen Artikelgruppe verschoben werden oder umkippen können, wenn die Artikelgruppe verzögert wird oder zum Stillstand kommt, insbesondere bei Erreichen einer Zielposition der Artikelgruppe. Grundsätzlich können die einzelnen Artikel der beförderten Artikelgruppe nicht nur beim Reduzieren der Überschubgeschwindigkeit destabilisiert werden. Auch allgemein beim Beschleunigen oder aber auch durch das Überschieben von der einen Fördereinheit des Moduls zur Fördereinheit des nachfolgenden Moduls kann es bedingt durch hohe Überschubgeschwindigkeiten oder aber auch durch die Übergänge zwischen den zwei Förderern zu einem Verrutschen oder Umkippen einzelner Artikel kommen, was durch die erfindungsgemäße Bewegungssteuerung des der Artikelgruppe vorauseilenden Anlagebalkens verhindert werden soll.

Da der Schubbalken die Artikelgruppe typischerweise gegenüber einer Auflageebene verschiebt, auf der die verschobenen Artikel gleiten, besteht zwischen den Auflageflächen der Artikel und der Auflageebene eine permanente Gleitreibung, die für einen Reibungswiderstand zwischen den gleitenden Oberflächen sorgt. Aus diesem Grund kann eine starke Verzögerung der Artikelgruppe zu einem Umkippen einzelner Artikel oder zu deren Verschieben gegenüber den benachbarten Artikeln führen, was durch den Anlagebalken zuverlässig verhindert werden kann. Wahlweise können die Module, zwischen denen die Artikel verschoben werden, über eigene Antriebe und angetriebene Auflageflächen verfügen, bspw. über sog. Mattenförderer o. dgl., so dass die Überführungsbewegungen der Artikel unterstützt werden. Bei antriebslosen Modulen - dies können bspw. sog. Transfersysteme oder Transfertische o. dgl. Förder- und/oder Hubelemente sein - ist es sinnvoll, die Auflageebenen, auf denen die Artikel verschoben werden, möglichst reibungsarm zu gestalten. So können für diese Auflageebenen bspw. Holzplatten oder Kunststoffplatten eingesetzt werden, die ggf. Längsprofilierungen in Form von Stegen, Rippen oder Nuten aufweisen können.

Das erfindungsgemäße Verfahren ermöglicht durch eine solche annähernd formschlüssige Übergabe einer Lage von Artikeln bzw. einer formatierten Artikelgruppe von einer Station zu einer folgenden Station insbesondere schnelle Verzögerungen, kann jedoch die Artikellage auch während der übrigen Phasen einer Überschubbewegung stabilisieren, da ein sich mit den Vorschubbewegungen der Artikellage mitbewegender Rückhaltebalken oder mitfahrender Anschlag die Lage sichern kann. Das Überschieben einer Lage von Artikeln, Gebinden oder Behältern kann ohne die Gefahr von umfallenden Gebinden oder Behältern erfolgen. Die Zeit für einen Überschub kann dadurch wesentlich verkürzt werden. Nach dem Überschub müssen andere Achsen (z.B. Hubwerke) nicht warten, bis z.B. ein Rahmen wieder zurückgefahren wird, um die andere Achsen (z.B. Hubwerke o. dgl.) freizugeben. Ein weiterer Nachteil bei Verwendung eines Rahmens, der hier erwähnt werden kann, besteht darin, dass ein solcher Rahmen wiederum weitere zusätzliche Konstruktionen beinhalten muss, um seine Anpassung an unterschiedlich große Lagengrößen von Artikellagen zu ermöglichen.

Der zumindest phasenweise gleichzeitig mit dem rückseitig angreifenden Schubbalken, insbesondere am Ende der Überschubbewegung an der Vorderseite (in Bezug auf die Überschub- oder Förderrichtung der Artikel) angreifende zweite Schubbalken, der als Bremsbalken oder Anlagebalken verstanden werden kann, kann in einen geringen Abstand zur Vorderseite gebracht sein, so dass er der Artikelgruppe in berührendem Kontakt oder gering beabstandet vorauseilt und somit eine hohe Überschubgeschwindigkeit und eine starke Verzögerung der Artikelgruppe erlaubt, ohne dass die Gefahr der Auflösung der Artikelformation durch Umkippen einzelner Artikel oder durch deren Verrutschen besteht. Wie oben bereits erwähnt, gilt dies zumindest für Phase mit konstanter Überschubgeschwindigkeit. Sofern jedoch die Artikellage während der Überschubbewegungen ausgeprägter Beschleunigungen und Verzögerungen unterliegt, kann der Anlagebalken bereits während der Überschubbewegung zur Stabilisierung der Artikelgruppe notwendig sein, insbesondere während Phasen stärkerer Verzögerung. Da solche Verzögerungsphasen im Verlauf der Überschubbewegung der Abbremsung der Artikelgruppe bis unmittelbar zum Stillstand vorausgehen, können bereits in diesen Phasen einzelne Artikel verrutschen oder kippen, was durch den an den in Förderrichtung zuvorderst bewegten Artikeln einer Artikelgruppe in geringem Abstand vorauseilenden Anlagebalken zuverlässig verhindert werden kann. Bei derartigen Bewegungsverläufen kann es ggf. auch ausreichen, den Anlagebalken nur in diesen genannten Phasen stärkerer Verzögerung zum Einsatz kommen zu lassen, so dass er bei einer sanften Verzögerung in der Schlussphase sich bereits wieder von den Artikeln entfernen kann.

Annähernd synchrone Bewegungen der beiden Balken zumindest während der Verzögerung der Artikelgruppe können dafür sorgen, dass die Stabilität der Artikelformation mit der gewünschten Zuverlässigkeit aufrechterhalten werden kann. Grundsätzlich kann das erfindungsgemäße Verfahren für beliebige Förderbewegungen von Artikelgruppen oder Artikellagen o. dgl. eingesetzt werden, bspw. zur Palettierung von solchen Artikellagen oder Gruppen von Artikeln oder auch zu deren Depalettierung, wobei jeweils die zuvor bestehende Artikelformation bzw. das bestehend Lagenbild weitestgehend aufrechterhalten wird.

Der Überschub der Artikel kann grundsätzlich zwischen allen denkbaren Arten und Varianten benachbarter Module innerhalb von Handhabungs- und/oder Verpackungsmaschinen, Fördereinheiten etc. erfolgen. So können gesamte Lagenbilder bzw. Artikellagen von einer Fördereinrichtung wie bspw. einem horizontal fördernden Mattenförderer o. dgl. in eine Hub- und/oder Umsetzeinrichtung wie bspw. einen Jalousiegreiferkopf überführt werden, der die Artikellagen bspw. zu deren Palettierung in mehreren Lagen übereinander stapeln kann. Wahlweise kann mit dem erfindungsgemäßen Verfahren auch eine Überführung aus einer solchen Hub- und/oder Umsetzeinrichtung wie einem Jalousiegreiferkopf o. dgl. auf eine Horizontalfördereinrichtung im Rahmen einer Depalettierung erfolgen.

Der Überschub kann auch mehrphasig erfolgen, so bspw. von einem ersten auf ein zweites Modul und von dort auf ein drittes Modul, wobei jeweils dieselben Überschubprinzipien mit den von hinten schiebenden Schubbalken und den ggf. von vorne abstützenden Stütz- oder Bremsbalken genutzt werden können. Eine solche Variante kann bspw. eine Überführung von einem Horizontalförderer auf eine Hub- und/oder Umsetzeinrichtung vorsehen, die bspw. durch einen Aufzug, eine Hubeinrichtung oder auch einen schwenkbaren und/oder heb- und senkbaren Arm umfassen kann. Ein sich daran anschließendes drittes Modul kann bspw. ein Stapelplatz zum übereinander erfolgenden Ablegen der vollständigen Artikellagen sein, wobei das zweite Modul für die richtige Höhenjustierung je nach erreichter Stapelhöhe auf dem dritten Modul sorgen kann, so dass ein horizontaler Überschub der gesamten Artikellage vom zweiten auf das dritte Modul ermöglicht ist.

Grundsätzlich ermöglicht die Erfindung nahezu beliebige Kombinationen und Anordnungsvarianten von zwei, drei oder mehr aufeinander folgender Module, ggf. unter Integration eines anschließenden Stapelplatzes oder eines Depalettierungsplatzes. So kann bspw. ein erstes Modul durch ein sog. Lagenbildungsband gebildet sein, von dem aus die Artikellagen in möglichst unveränderter Formation der Artikel zueinander zu einem zweiten Modul überführt werden. Ein solches zweites Modul kann bspw. ein Hubwerk umfassen, das einen Höhenausgleich ermöglicht. Ein drittes Modul, in das die Artikellage anschließend überführt wird, kann bspw. durch eine Jalousiebeladestation o. dgl. gebildet sein, die ggf. wie das zweite Modul höhenvariabel sein oder räumlich variabel sein kann, bspw. durch eine Ausbildung mit einem in verschiedene Raumrichtungen beweglichen Roboterarm. Eine alternative Anordnungsvariante könnte im Wesentlichen zwei Module umfassen, bei der bspw. ein erstes Modul durch das erwähnte Lagenbildungsband und ein zweites Modul durch eine Jalousiebeladestation gebildet wäre. An das zweite oder dritte Modul - je nach Konfiguration bspw. die Jalousiebeladestation - könnte sich danach ein Stapelplatz anschließen, auf den die Artikellagen jeweils überführt und vorzugsweise übereinander gestapelt werden können.

Die wenigstens zwei parallel zur Förderrichtung der Artikelgruppen oder Artikellagen bewegbaren Schubbalken können sich je nach Bedarf innerhalb von definierten Bewegungsräumen bewegen, die sich wahlweise über Schnittstellen zwischen benachbarten Modulen hinweg erstrecken können. So kann sich ggf. der die Artikel schiebende Schubbalken gemäß einer vorteilhaften Ausführungsvariante zumindest über eine kurze Strecke in einen Förderweg in das Modul hinein bewegen, in das die Artikellage hineingeschoben wird. Dies kann bspw. die erwähnte Hub- und/oder Umsetzeinrichtung bzw. der Jalousiegreiferkopf o. dgl. sein. Dieses Transportmodul muss entsprechend vorbereitet sein, um den Schubbalken zumindest kurzzeitig aufzunehmen, bis die überführte Artikellage zum Stillstand gekommen ist und keine Artikel mehr verzögert werden und deshalb kippen oder verrutschen können. Um diesen Bewegungsbereich für den Schubbalken ermöglichen zu können, kann dieser bzw. seine Führungselemente wahlweise Teil des zweiten Moduls, d.h. der Hub- und/oder Umsetzeinrichtung bzw. des Jalousiegreiferkopfes, sein. Wahlweise jedoch ist es auch möglich, dass die Führungselemente, welche für den Antrieb und die Bewegungssteuerung des Schubbalkens verantwortlich sind, zumindest während des Überschubs in dieses zweite Modul hineinreichen, was bspw. durch einen geeigneten Gestänge- oder Linearantrieb o. dgl. erreicht werden kann.

Eine entsprechende Bewegungssteuerung ist für den die Artikellage oder Artikelgruppe von vorne abbremsenden Anlagebalken nicht erforderlich, da sich dieser beim Überschub der Artikellage von einem Modul zu einem Nachbarmodul bis an die Schnittstelle der beiden aneinander grenzenden Module bewegen kann, während die weitere Abstützung der Artikel von dem Anlagebalken des Moduls übernommen wird, in das die Artikellage geschoben wird. Wahlweise jedoch kann auch dieser Anlagebalken zumindest über einen kurzen Weg über diese Schnittstelle hinaus in das zweite Modul hineinreichen, bevor er für die Übernahme einer folgenden Artikellage oder Artikelgruppe wieder zurück bewegt wird.

Die Schubbalken können auf unterschiedliche Weise angetrieben und aufgehängt sein. So können sie bspw. weitgehend synchron an umlaufenden Ketten umlaufen und dabei in ihrer Vorschubbewegung jeweils auf Höhe der zu verschiebenden bzw. abzustützenden Artikel bewegt werden, während sie auf ihren Rücklaufbewegungen oberhalb oder unterhalb des Förderniveaus der beförderten Artikellagen in Gegenrichtung zu deren Förderrichtung zurückbewegt werden können. Vorzugsweise umfasst dabei jedes Transport- und/oder Hubmodul ein separates Antriebs- bzw. Umlaufsystem für die Schubbalken. Wahlweise können jedoch auch andere Antriebs- und Bewegungsvarianten eingesetzt werden, um die Schubbalken jeweils in Eingriff oder aus dem Eingriff mit den Artikellagen zu bringen. So können die Schubbalken bspw. senkrecht zu ihrer Vorschubrichtung in den Förderweg der Artikellagen eingeschoben oder herausgezogen werden, wahlweise von oben oder von unten oder aus seitlicher Richtung. Auch Kombination der erwähnten Bewegungsführungen und/oder -steuerungen sind möglich.

Das in der vorliegenden Erfindung dargestellte Verfahren, bei dem Artikellagen von einer Station zu einer weiteren Station oder von einem Modul zu einem weiteren Modul überschoben - ggf. unter Überwindung eines Höhenunterschiedes, bspw. beim Überschieben in ein oder aus einem Hubwerk oder unter Nutzung von Doppelhubwerken o. dgl. - werden, eignet sich grundsätzlich für jedes Überschieben einer Artikellage zwischen zwei vorgegebenen Positionen, wobei die Artikellage nicht nur geschoben, sondern mittels eines weiteren Anlageelementes in Gestalt eines Anschlags, eines Rückhaltebalkens oder einer Kombination aus Rückhaltebalken und Schieber in seiner Artikelformation stabilisiert wird, indem das Anlageelement bzw. der Rückhaltebalken einem Umfallen von Artikeln, Gebinden oder Behältern entgegenwirkt. Das Verfahren kann bspw. dem Einschieben von Lagen bestehend aus Gebinden oder Behältern bei einem Palettiersystem dienen. Es kann wahlweise auch dem Abschieben von Lagen bei einem Ent- oder Depalletiersystem dienen.

Wenn im vorliegenden Zusammenhang meist von Artikeln oder von Artikellagen die Rede ist, so können dies grundsätzlich die unterschiedlichsten Packgüter sein, bspw. einzelne Kartons, Getränkebehälter wie Flaschen, Dosen oder Getränkekartons, Stückgüter etc., die in vorgegebenen Anordnungen palettiert, gestapelt oder depalletiert werden können. Als Artikel kommen auch Gebinde in Frage, bspw. sog. Foliengebinde, Umreifungsgebinde o. dgl.

Die vorliegende Erfindung umfasst weiterhin eine Vorrichtung zur horizontalen Verschiebung einer Artikelgruppe oder Artikellage zwischen wenigstens zwei benachbarten Modulen unter weitgehender Beibehaltung der Relativpositionen einer die Artikelgruppe oder -lage bildenden Mehrzahl von Artikeln relativ zueinander. Die Vorrichtung umfasst wenigstens einen an den Artikeln angreifenden Schubbalken zum horizontalen Verschieben der Artikellage auf ein benachbartes Modul sowie wenigstens einen Anlagebalken, der in seiner Bewegung in Überschubrichtung zumindest temporär mit dem Schubbalken gekoppelt ist. Bei dieser erfindungsgemäßen Vorrichtung kann das erste Modul bspw. durch einen Gruppiertisch o. dgl. gebildet sein, während das zweite Modul bspw. durch einen Aufzug o. dgl. und/oder einen Jalousiegreiferkopf gebildet sein kann. Das dritte Modul kann bspw. durch eine weitere Handhabungsstation gebildet sein, die dazu dienen kann, die Artikellagen zum Stapelplatz zu überführen, wo mehrere Artikellagen übereinander abgelegt werden können.

Wahlweise kann auch das erste Modul durch ein Förderband, ein sog. Lagenbildungsband gebildet sein, von dem aus die Artikellagen in möglichst unveränderter Formation der Artikel zueinander zum zweiten Modul überführt werden. Das zweite Modul kann bspw. ein Hubwerk sein, das einen Höhenausgleich ermöglicht. Wenn im Zusammenhang der vorliegenden Erfindung von einem Höhenausgleich die Rede ist, so ist damit insbesondere eine Stapelmöglichkeit bei der Überführung der Artikellagen auf eines der Module gemeint. Da die Artikellagen bei der Palettierung in der Regel in mehreren Lagen übereinander gestapelt werden, muss zumindest eines der Module eine Höhenverstellbarkeit aufweisen. Diese Höhenverstellbarkeit umfasst sowohl eine Absenkbarkeit nach unten zur Überführung der Artikellagen in einem unteren Niveau als auch eine Hebbarkeit über das Niveau des ersten und/oder zweiten Moduls, um die Artikellagen auf die Oberseite bereits zuvor übereinander gestapelter Artikellagen ablegen zu können. Entsprechendes gilt auch bei der Depalettierung, da ein zu depalettierender Stapel mit mehreren Artikellagen je nach Fortschritt der Entnahme allmählich kleiner wird und eine Höhenanpassung des übernehmenden Moduls erfordert.

Ein drittes Modul, in das die Artikellage anschließend überführt wird, kann bspw. durch eine Jalousiebeladestation o. dgl. gebildet sein, die wahlweise an einem Roboterarm angeordnet sein kann, der eine räumliche Bewegung in verschiedene Richtungen ermöglicht. An dieses dritte Modul kann sich der Stapelplatz anschließen. Eine alternative Anordnungsvariante könnte im Wesentlichen zwei Module umfassen, bei der bspw. das erste Modul durch das erwähnte Lagenbildungsband und das zweite Modul durch eine Jalousiebeladestation gebildet sein können. Bei dieser Ausführungsvariante wäre es zudem noch denkbar, dass das erste Modul, das erwähnte Lagenbildungsband, zusätzlich ein Hubwerk für einen Höhenausgleich umfasst. Der Stapelplatz ist in der Regel nicht als separates Modul im Sinne der vorliegenden Erfindung zu bezeichnen. Der Stapelplatz kann sich senkrecht fluchtend unterhalb des Moduls der Jalousiebeladestation befinden. Wahlweise kann sich der Stapelplatz jedoch auch in einem unmittelbar neben dem Modul der Jalousiebeladestation angeordneten Bereich befinden.

Wahlweise kann zumindest einer der Schubbalken und/oder wenigstens einer der Anlagebalken mit einem endlos umlaufenden Zugmittelantrieb zur Herstellung der Schubbewegungen gekoppelt sein. Es sind jedoch auch andere Antriebe für die Schub- und Anlagebalken möglich, so bspw. Linearantriebe.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zwei schematische Ansichten einer beginnenden Überschubbewegung einer Artikellage von einem Modul auf ein benachbartes zweites Modul.
Fig. 2 zeigt in zwei Ansichten die erfolgte Überschubbewegung gemäß Fig. 1.
Fig. 3 zeigt zwei schematische Ansichten einer erfindungsgemäßen Überschubbewegung einer Artikellage von einem Modul auf ein benachbartes zweites Modul.
Fig. 4 zeigt die erfolgte Überschubbewegung gemäß Fig. 3.
Fig. 5 bis Fig. 15 zeigen in verschiedenen aufeinander folgenden schematischen Ansichten einen Überschub einer Artikellage zwischen drei benachbarten Modulen.
Fig. 16 zeigt eine schematische Ansicht einer Ausführungsvariante zweier benachbarter Module.
Fig. 17 zeigt eine Ausführungsvariante eines Hubmoduls in Form eines Jalousiegreiferkopfes in schematischer Darstellung.
Fig. 18 bis Fig. 22 zeigen in schematischen Ansichten aufeinander folgende Prozessschritte beim Überschub einer Artikellage zwischen drei benachbarten Modulen.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

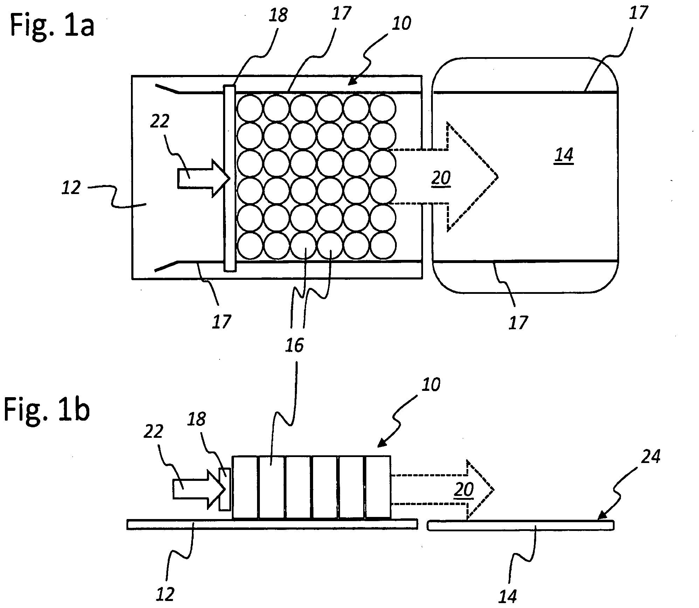

Die Fig. 1 zeigt in einer schematischen Draufsicht (Fig. 1a) und in einer schematischen Seitenansicht eine horizontale Verschiebung einer Artikelgruppe oder Artikellage 10 aus einer ersten Lage von einem ersten Modul 12, bspw. von einem Gruppiertisch, der Teil eines Gruppiersystems sein kann, in eine zweite Lage eines zweiten Moduls 14, das bspw. ein Hubmodul oder Beladestation o. dgl. sein kann. Die gezeigte Artikellage 10 umfasst im gezeigten Ausführungsbeispiel eine regelmäßige Anordnung einer Mehrzahl von Artikeln 16, die im Rechteckverbund stehen und ohne Änderung des Lagenbildes mittels eines Schubbalkens 18 vom ersten Modul 12 auf das zweite Modul 14 geschoben werden sollen. Die Artikel 16 können bspw. Kartons, Gebinde mit mehreren einzelnen Artikeln oder Behältern oder auch einzelne Behälter sein, die in regelmäßiger Anordnung nebeneinander stehen. Normalerweise weisen die Artikel 16 eine Höhe auf, die größer ist als eine Seitenkante ihrer Grundfläche, so dass sie bei starken Beschleunigungen oder Verzögerungen zum Kippen neigen können. Selbst wenn dies nicht zutrifft, d.h. bei Artikeln 16 mit relativ geringer Höhe, könnte bei hohen Beschleunigungen, hohen Überschubgeschwindigkeiten und starken Verzögerungen beim Überschieben der Lage von einem Modul in das nachfolgende Modul, bedingt durch die Übergänge, ein Auseinanderdriften bzw. Verrutschen der Gebinde bzw. Artikel 16 auftreten.

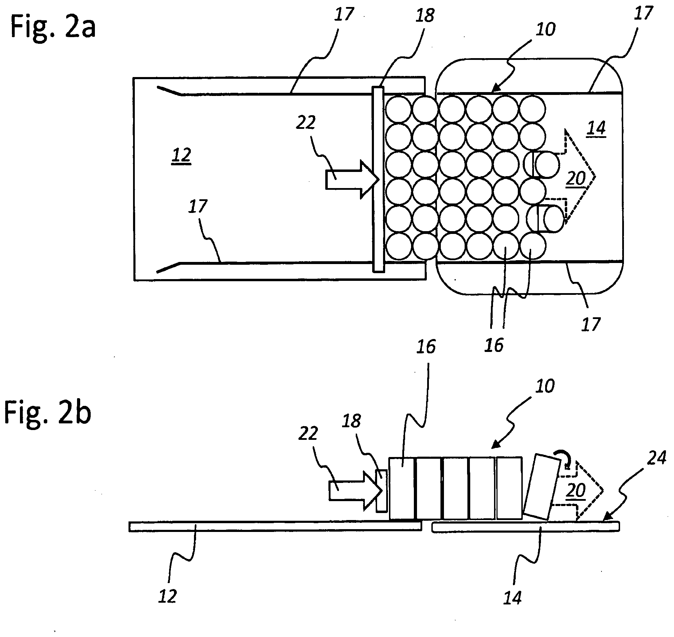

Der für die Verschiebung der Artikelgruppe oder Artikellage 10 verantwortliche Schubbalken 18 greift an den in Bezug auf die Förder- bzw. Vorschubbewegung 20 rückseits der Artikelgruppe 10 befindlichen Artikeln 16 an und verschiebt dadurch die gesamte Artikelgruppe oder Artikellage 10, die ggf. zur Aufrechterhaltung des Lagenbildes seitlich geführt sein kann. Die optionalen seitlichen Führungen sind in der Fig. 1a und in der Fig. 2a mit der Bezugsziffer 17 bezeichnet. Durch die rückseitige Einwirkung des Schubbalkens 18 und die beidseitig des Überschubweges angeordneten seitlichen Führungen 17 können Relativpositionen der die Artikelgruppe 10 bildenden Mehrzahl von Artikeln 16 relativ zueinander weitgehend beibehalten werden; d.h. das Lagenbild der verschobenen Artikelgruppe 10 bleibt entlang der Vorschubbewegung 20 weitgehend aufrechterhalten.

In den folgenden Figuren wurde auf die Darstellung der seitlichen Führungen 17 aus Gründen der besseren Übersichtlichkeit verzichtet, was jedoch nicht bedeutet, dass die Führungen dort nicht vorhanden wären.

Wie die beiden schematischen Darstellungen der Fig. 2 mit der Draufsicht der Fig. 2a und der Seitenansicht der Fig. 2b verdeutlichen, erfolgt die Vorschubbewegung 20 nicht mit konstanter Geschwindigkeit, da die Schiebebewegung 22 des Schubbalkens 18 zumindest kurz vor dem Erreichen der Zielposition der Artikellage 10 auf dem zweiten Modul 14 allmählich langsamer wird, damit sie nicht plötzlich zum Stillstand kommt. Dennoch besteht die Gefahr, dass einzelne der zuvorderst in der verschobenen Artikellage 10 stehenden Artikel 16 verrutschen oder umkippen können, wenn die Artikellage 10 stärker verzögert wird oder plötzlich zum Stillstand kommt, insbesondere bei Erreichen der Zielposition der Artikellage 10. Da der Schubbalken 18 die Artikellage 10 typischerweise gegenüber einer Auflageebene 24 des ersten und/oder zweiten Moduls 12, 14 verschiebt, auf der die verschobenen Artikel 16 gleiten, besteht zwischen den Bodenflächen der Artikel 16 und der Auflageebene 24 eine permanente Gleitreibung, die für einen Reibungswiderstand zwischen den gleitenden Oberflächen sorgt. Aus diesem Grund kann eine starke Verzögerung der Artikellage 10 zu einem Umkippen einzelner Artikel 16 oder zu deren Verschieben gegenüber den benachbarten Artikeln 16 führen, was durch die vorliegende Erfindung verhindert werden soll.

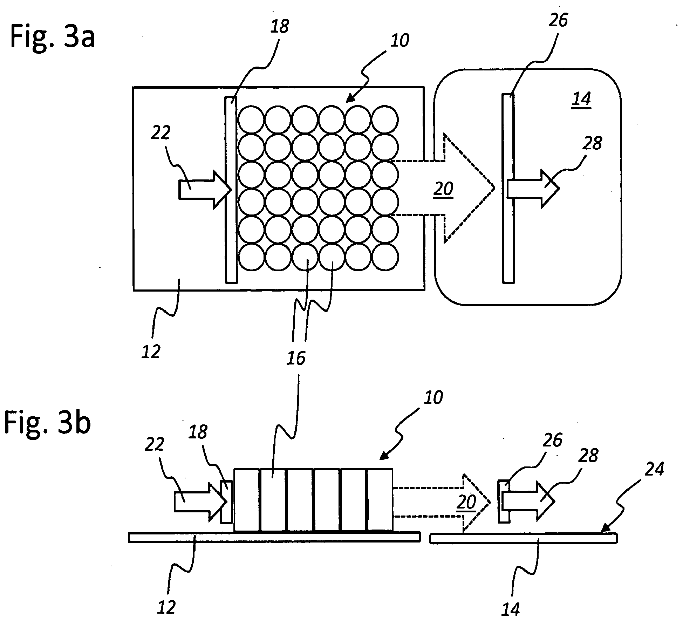

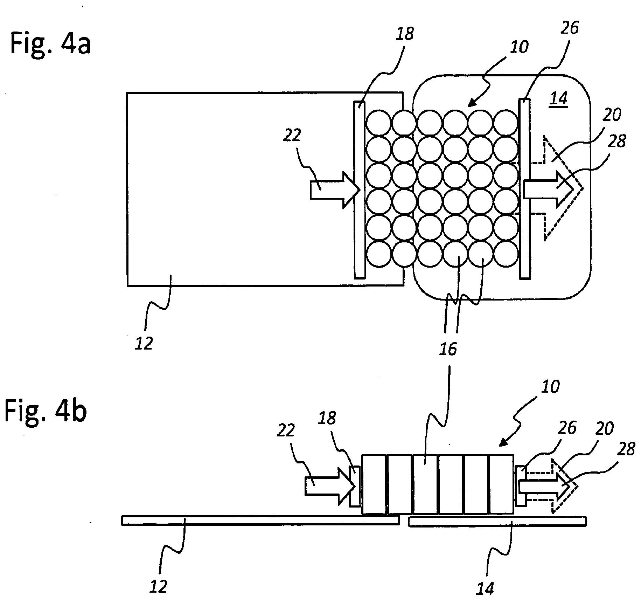

So verdeutlichen die Figuren 3 und 4 in schematischen Draufsichten (Fig. 3a und Fig. 4a) sowie in schematischen Seitenansichten (Fig. 3b und Fig. 4b) einen wesentlichen Aspekt des erfindungsgemäßen Verfahrens, bei dem vorgesehen ist, dass ein zumindest temporär den in Förderrichtung frontseitig befindlichen Artikeln 16 zugeordneter Anlagebalken 26 der Artikellage 10 zumindest kurz vor oder bei Erreichen der Ruhelage auf dem zweiten Modul 14 mit geringem Abstand zu den vordersten Artikeln 16 der Artikellage 10 vorauseilt. Wahlweise kann der Anlagebalken 26 im Bereich des zweiten Moduls 14 parallel zur Vorschubbewegung 20 in einer Weise zwischen zwei Endpositionen bewegt werden, dass die Schiebebewegung 28 des Anlagebalkens 26 zumindest temporär parallel und gleichsinnig zur Vorschubbewegung 20 der Artikellage 10 und der Schiebebewegung 22 des Schubbalkens 18 erfolgt. Um zu verhindern, dass die zuvorderst stehenden Artikel 16 der verschobenen Artikellage 10 gegenüber den übrigen Artikeln 16 oder dem vorgesehenen Lagenbild verschoben werden oder umkippen, muss diese Schiebebewegung 28 des Anlagebalkens 26 zumindest in Phasen starker Verzögerung der Artikellage 10 und/oder in der Endphase der Überschubbewegung annähernd synchron zur Schiebebewegung 22 des Schubbalkens 18 erfolgen, insbesondere in einer Brems- oder Verzögerungsphase der Artikellage 10, wenn diese verzögert wird und zum Stillstand kommt. Wie bereits erwähnt, kann der Anlagebalken 26 je nach Bewegungsverlauf der Vorschubbewegung 20 der Artikellage 10 auch vorzeitig in Pfeilrichtung 28 von der Artikellage 10 entfernt und dabei beschleunigt werden, bevor die Artikellage 10 zum Stillstand kommt. Bei einer solchen Bewegungssteuerung stabilisiert der Anlagebalken 26 die Artikelgruppe 10 zwar zunächst während ihres Verzögerungsvorganges, kann sich jedoch unmittelbar vor Erreichen des Stillstandes wieder von der Artikelgruppe oder -lage 10 entfernen. Dies kann damit zusammenhängen, dass die Verzögerung der Artikellage 10 nicht gleichmäßig erfolgt, sondern kurz vor Erreichen der Ruhelage allmählich sanfter wird, um einen plötzlichen, ruckartigen Stopp der Artikellage 10 zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikellage 10 mit dem Anlagebalken 26 unmittelbar vor dem Stillstand nicht mehr erforderlich, so dass dieser bereits wieder in beschleunigter Bewegung 28 von der Artikellage 10 entfernt werden kann.

Wie die Figuren 3 und 4 in schematischer Weise verdeutlichen, ermöglicht das erfindungsgemäße Verfahren durch die dargestellte annähernd formschlüssige Übergabe einer Lage 10 von Artikeln 16 von einer Station (Modul 12) zu einer benachbarten Station (Modul 14) sehr schnelle Über- und Vorschubbewegungen 20 und anschließende relativ starke Verzögerungen, da der sich mit den Vorschubbewegungen 20 der Artikellage 10 mitbewegende Rückhalte- oder Anlagebalken 26 die Lage 10 sichert und stabilisiert. Auch hier sind seitliche Führungen für die Artikellage 10 sinnvoll, auch wenn sie in den Figuren nicht eingezeichnet sind. Grundsätzlich kann es ausreichen, wenn der zweite Schubbalken oder Anlagebalken 26 lediglich zum Ende der Überschubbewegung, insbesondere während der Verzögerung der Artikellage 10 bis zum Stillstand, in Kontakt mit den zuvorderst beförderten Artikeln 16 gebracht wird (vgl. Fig. 4a und Fig. 4b), da im Wesentlichen nur in dieser Phase die vorderste Reihe der Artikel 16 zum Umkippen in Förderrichtung neigt.

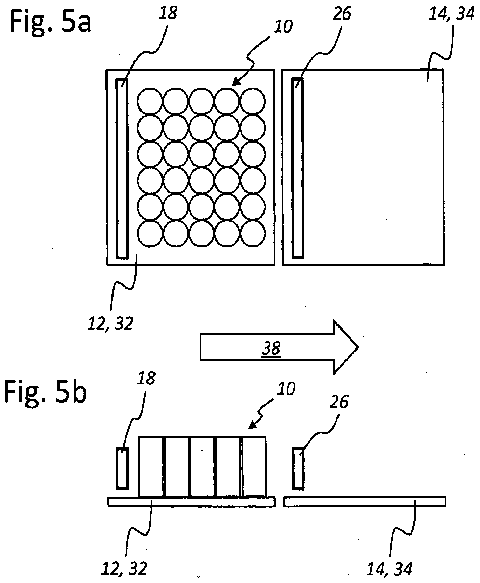

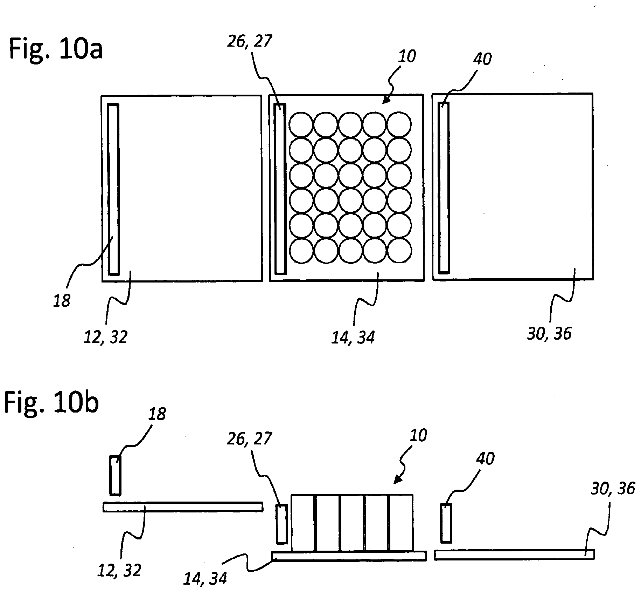

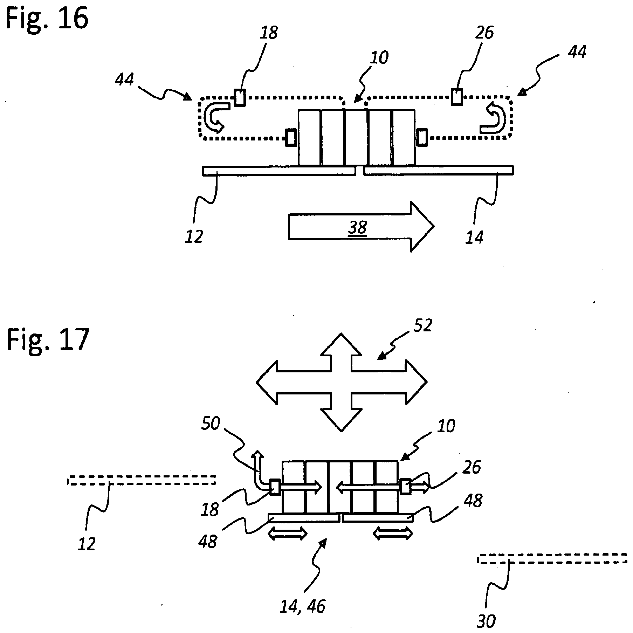

Wie die Figuren 5 bis 15 anhand eines Ausführungsbeispiels verdeutlichen, kann der Überschub auch mehrphasig erfolgen, nämlich von einem ersten Modul 12 auf ein zweites Modul 14 und von dort auf ein drittes Modul 30 (vgl. Figuren 10 bis 15), wobei jeweils dieselben Überschubprinzipien mit den von hinten schiebenden Schubbalken 18 und den ggf. von vorne abstützenden Stütz-, Brems- oder Anlagebalken 26 genutzt werden können. Bei einer solchen Variante kann bspw. das erste Modul 12 durch einen Gruppiertisch 32 oder ein sog. Lagenbildungsband o. dgl. gebildet sein, von dem aus eine Überführung von Artikellagen 10 auf eine das zweite Modul 14 bildende Hub- und/oder Umsetzeinrichtung vorgesehen sein kann, die bspw. durch einen Aufzug 34, eine Hubeinrichtung oder auch einen schwenkbaren und/oder heb- und senkbaren Arm einer hier nicht näher dargestellten Beladeeinrichtung o. dgl. gebildet sein kann. Das sich daran anschließende dritte Modul 30 kann bspw. eine Jalousiebeladestation o. dgl. (vgl. Fig. 17) oder wahlweise auch ein Stapelplatz 36, eine Beladestation oder ein Palettenbeladeplatz o. dgl. zum übereinander erfolgenden Ablegen der vollständigen Artikellagen 10 sein, wobei das zweite Modul 14 bzw. der Aufzug 34 für die richtige Höhenjustierung der Artikellage 10 je nach erreichter Stapelhöhe auf dem dritten Modul 30 bzw. dem Stapelplatz 36 sorgen kann, so dass ein horizontaler Überschub der gesamten Artikellage 10 vom zweiten Modul 14 bzw. dem Aufzug 34 auf das dritte Modul 30 bzw. den Stapelplatz 36 ermöglicht ist. Wahlweise können alle Module 12, 14 und 30 jeweils über einen Bahnantrieb in Form eines geeigneten Horizontalfördersystems verfügen. Diese Bahnantriebe sind jeweils separat steuerbar, wobei die Antriebsgeschwindigkeit auf die Vorschubgeschwindigkeit der Schub- und Anlagebalken 18 und 26 abzustimmen ist. Normalerweise ist die Fördergeschwindigkeit des Bandes kleiner oder gleich der Überschubgeschwindigkeit. In den meisten Fällen ist die Bandgeschwindigkeit jedoch geringer als die Überschubgeschwindigkeiten, da solche Bänder in aller Regel nicht für hohe Geschwindigkeiten ausgelegt sind, wie sie bei den Überschubvorgängen wünschenswert sind.

Werden Module 12, 14 und/oder 30 ohne eigene Bahnantriebe eingesetzt, so ist es sinnvoll, die Auflageebenen, auf denen die Artikellagen 10 verschoben werden, möglichst reibungsarm zu gestalten. So können für diese Auflageebenen bspw. Holzplatten oder Kunststoffplatten eingesetzt werden, die ggf. Längsprofilierungen in Form von Stegen, Rippen oder Nuten aufweisen können.

Es sei an dieser Stelle erwähnt, dass es für den grundsätzlichen Erfolg der vorliegenden Erfindung und für das erfindungsgemäße Zusammenwirken der Schub- und Anlagebalken nicht entscheidend ist, ob das dritte Modul durch eine bewegliche Station wie bspw. eine Jalousiebeladestation oder dgl. oder durch einen nicht beweglichen Stapelplatz (wie in den Figuren 3 ff. beispielhaft veranschaulicht) gebildet ist. Die Begrifflichkeiten der ersten, zweiten und dritten Module sind daher vorrangig als Platzhalter für verschiedene Handhabungsstationen zu verstehen, zwischen denen die geschlossenen Artikellagen 10 mittels der gezeigten Überführungsbewegungen verschoben werden, ohne dass dabei einzelne Artikel verrutschen, umkippen oder auf andere Weise die Artikelformation verlassen.

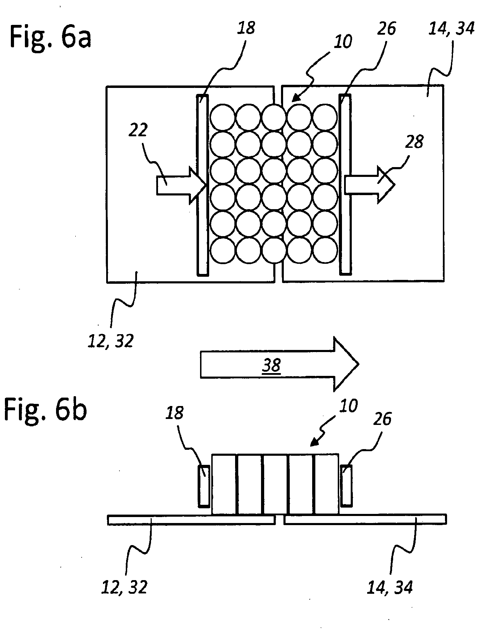

Bei den nachfolgend beschriebenen Figuren 5 bis 15 zeigen jeweils die oberen Ansichten (Fig. 5a, Fig. 6a usw.) schematische Draufsichten der zwischen den Modulen überführten Artikellage 10, während die unteren Ansichten (Fig. 5b, Fig. 6b usw.) jeweils schematische Seitenansichten derselben Prozessphase zeigen.

Die Fig. 5 zeigt in zwei Ansichten den Beginn einer Überschubbewegung der Artikellage 10 vom Gruppiertisch 32 auf den Aufzug 34. Der dem Gruppiertisch 32 zugeordnete Schubbalken 18 befindet sich links hinter der Artikellage 10, so dass diese nach rechts in Vorschubrichtung 38 auf den Aufzug 34 geschoben werden kann. Der Gegenhalte- oder Anlagebalken 26 befindet sich am linken Rand der Auflagefläche des Aufzugs 34, bereit für die Anlage an die Artikellage 10 nach deren beginnender Überführung auf den Aufzug 34, was in den beiden Ansichten der Fig. 6 gezeigt ist. Der dem Gruppiertisch 32 zugeordnete Schubbalken 18 schiebt die Artikellage 10 auf den in selber Höhe stehenden Aufzug 34, während sich der diesem zugeordnete Anlagebalken 26 in berührendem Kontakt oder mit geringem Abstand vor der Artikellage 10 bewegt. Die Vorschubbewegungen der beiden Balken 18 und 26 erfolgen weitgehend synchron.

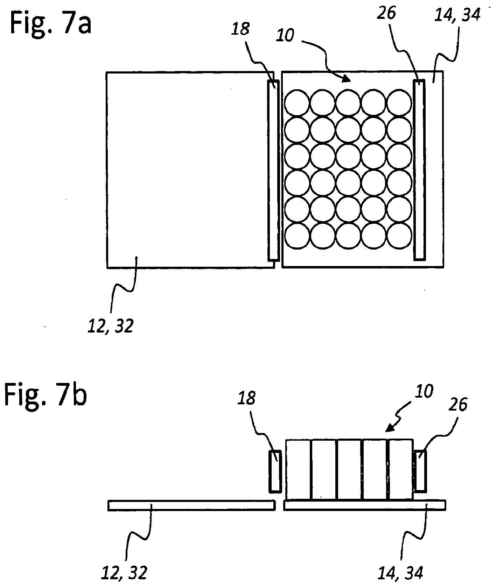

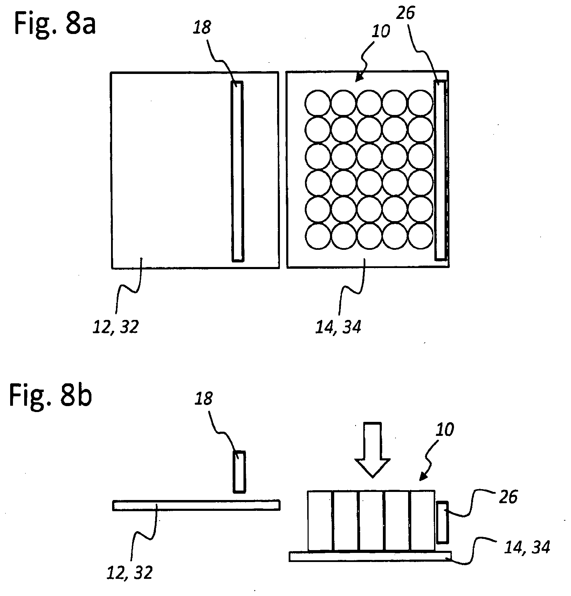

Gemäß den beiden Ansichten der Fig. 7 wurde die Artikellage 10 vollständig auf den Aufzug 34 geschoben, wobei der Anlagebalken 26 einen Gegenhalter vor der Lage 10 bildet und diese bei der notwendigen Verzögerung der Überführungsbewegung gegen umfallende Gebinde oder Artikel 16 sichert. Der Schubbalken 18 des ersten Moduls 12 bzw. des Gruppiertischs 32 hat seine Endposition erreicht und wird angehalten, während der Anlagebalken 26 bis zu seiner Endposition am vorderen Rand der Auflagefläche des Aufzuges 34 verschoben wird (vgl. Fig. 8). Das Hubwerk des Aufzuges 34 kann nun gemäß Fig. 8 abgesenkt oder angehoben werden, um an das Niveau des dritten Moduls 30 bzw. des Stapelplatzes 36 angepasst zu werden. Der Schubbalken 18 fährt gegen die Förderrichtung 38 der Artikellage 10 in seine Anfangsposition zurück, während der Anlagebalken 26 zunächst ruht, da er seine Funktion als Stabilisierung der abgebremsten Artikel 16 erfüllt hat.

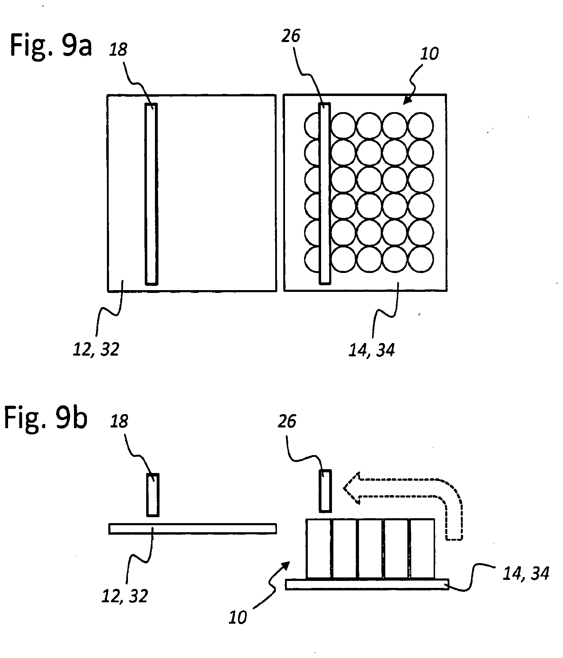

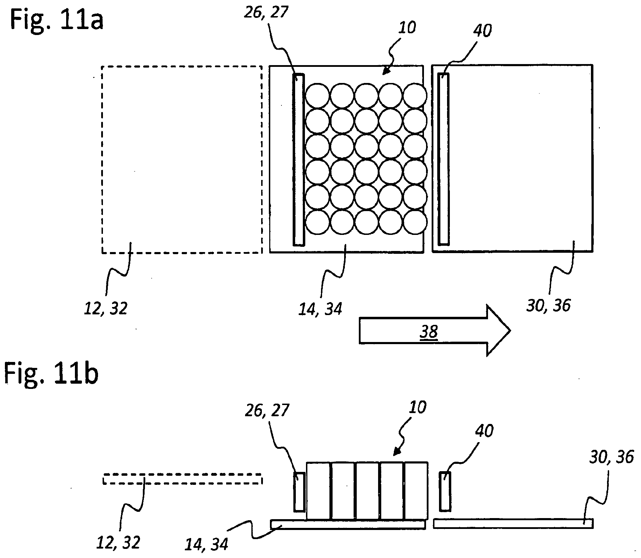

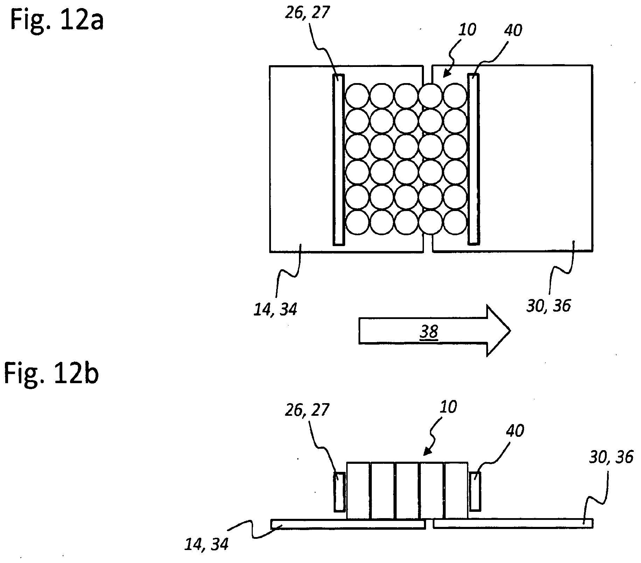

Wie die beiden schematischen Ansichten der Fig. 9 verdeutlichen, wird die Rückführbewegung des Schubbalkens 18 fortgesetzt, während auch der Anlagebalken 26 zu seiner Ausgangslage entgegen der Vorschubrichtung 38 zurückbefördert wird. Da sich die Artikellage 10 noch auf dem zwischenzeitlich abgesenkten Aufzug 34 befindet, kann der Anlagebalken 26 nicht auf demselben Niveau zurückgeführt werden, sondern kann bspw. gemäß Fig. 9b angehoben und in Pfeilrichtung oberhalb der Artikellage 10 zurückgeführt werden. Wahlweise könnte er auch abgesenkt und unterhalb des Aufzuges 10 zurückgeführt oder seitlich aus dem Eingriffsbereich mit den Artikeln 16 gebracht und auf geeignete Weise gegen die Vorschubrichtung 38 verschoben werden. Diese Rückbewegung des Anlagebalkens 26 dient dazu, um ihn in der folgenden Überschubbewegung gemäß Fig. 10 als Schubbalken 27 verwenden zu können. Die Artikellage 10 kann nun auf das dritte Modul 30 bzw. den Stapelplatz 36 überschoben werden, wo ein weiterer Anlagebalken 40 für die Anlage und Stabilisierung der vorderen Artikel 16 der Artikellage 10 bei deren Überschubbewegung sorgt, was in den Figuren 11 und 12 gezeigt ist. Der zuvor als Anlagebalken 26 fungierende Schubbalken 27 des Aufzuges 34 schiebt die Artikellage 10 von hinten in Vorschubrichtung 38 (Fig. 10, Fig. 11), während der Anlagebalken 40 des Stapelplatzes 36 als vordere Anlage dient (Fig. 11). Die beiden Balken 27 und 40 bewegen sich hierbei zumindest phasenweise mitsamt der überschobenen Artikellage 10 synchron in Vorschubrichtung 38. In den Figuren 11 bis 14 ist das erste Modul bzw. der Gruppiertisch 32 nicht mehr dargestellt, da es/er an der weiteren Überschubbewegung der Artikellage 10 auf den Stapelplatz 36 nicht mehr beteiligt ist.

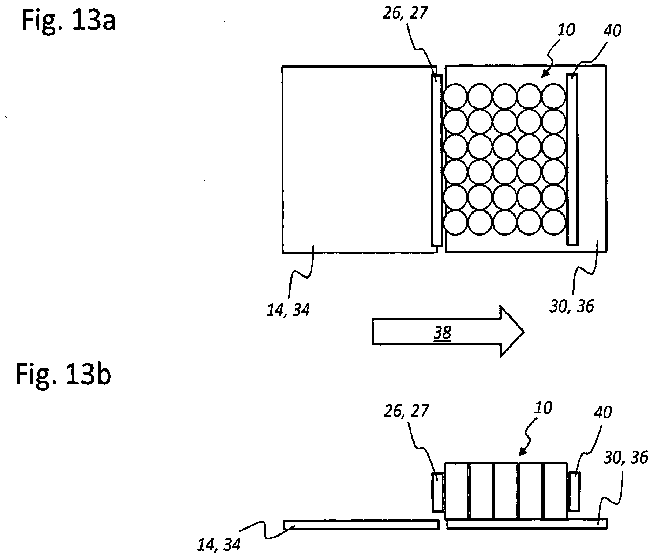

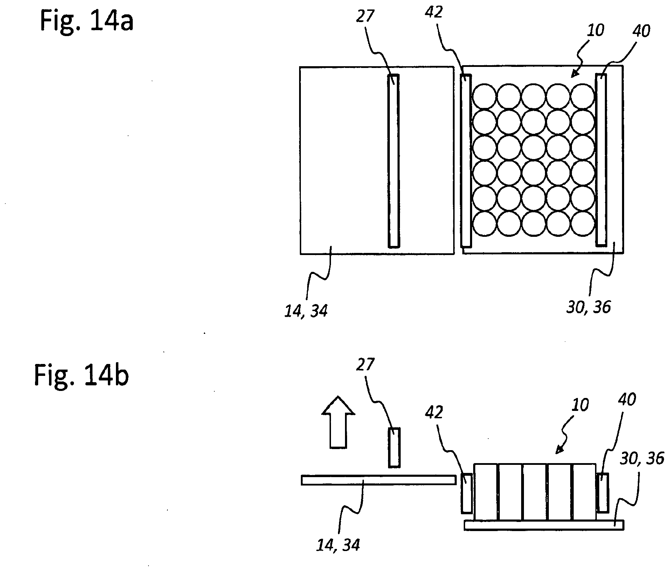

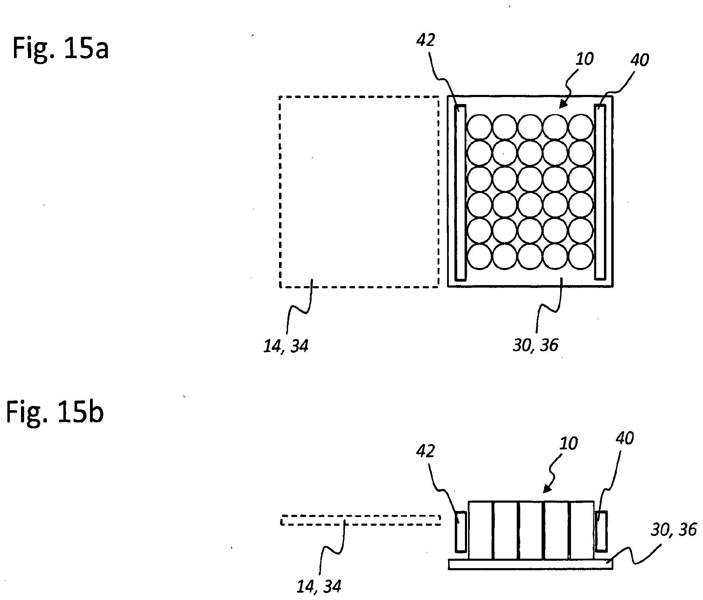

Sobald gemäß Fig. 13 die Endposition für den Schubbalken 27 des Aufzuges 34 erreicht ist und die Artikellage 10 fast vollständig auf den Stapelplatz 36 geschoben wurde, kann der Aufzug 34 wieder angehoben oder -je nach Phase des Stapelvorganges und je nach der Anzahl der übereinander gestapelten Artikellagen 10 - auch abgesenkt werden, um wieder auf das Niveau des Gruppiertisches 32 eingestellt zu werden. Gemäß Fig. 14 kann zudem der Schubbalken 27 gegen die Vorschubrichtung 38 zurückbewegt werden, um anschließend wieder als Anlagebalken 26 für die nächste vom ersten Modul 12 oder Gruppiertisch 12 überschobene Artikellage 10 zu fungieren. Die Darstellung der Fig. 14 lässt zudem einen zusätzlichen Schubbalken 42 erkennen, der dem dritten Modul 30 bzw. dem Stapelplatz 36 zugeordnet ist und für die endgültige Positionierung sorgt, indem die Artikellage 10 um einen kurzen Weg in Vorschubrichtung 38 auf dem Stapelplatz 36 positioniert wird. Während nun das Hubwerk des Aufzuges 34 bereits wieder angehoben werden kann (vgl. Fig. 14b), muss dieser weitere Schubbalken 42 des Stapelplatzes in seine Position hinter die Artikellage 10 gebracht werden, um diese noch ein kurzes Stück schieben zu können (vgl. Fig. 15).

Die beiden Balken 40 und 42 können sich synchron bewegen und schließlich stehenbleiben, wenn die für die Stapelung erforderliche Endposition der Artikellage 10 erreicht wurde. Da der Aufzug 34 in dieser Ansicht für die Positionierung der Artikellage 10 keine Funktion mehr hat, wurde er in der Darstellung der Fig. 15 weggelassen. Die beiden Balken 40 und 42 müssen sich jedoch nicht zwingend synchron bewegen. Wahlweise können ihre Bewegungen auch in einer Weise gesteuert werden, dass der Bremsbalken 40 anfänglich synchron mit dem Schubbalken 27 bewegt wird und dabei einen gewissen Abstand zur vordersten Reihe der Artikellage 10 einhält. Danach kann kurz vor Erreichen der Endposition für den Bremsbalken 40 seine Geschwindigkeit verringert werden, bis er schließlich in der Endposition der Artikellage 10 vor dieser zum Stillstand kommt. Während dieser Verzögerungsphase wird der Abstand zur vordersten Artikelreihe der Artikellage 10 allmählich verringert, (vgl. Fig. 13 und Fig. 14).

Der Antrieb der jeweiligen Schub- und Anlagebalken kann auf unterschiedliche Weise erfolgen, bspw. über Linearantriebe oder auch gemäß Fig. 16 mittels umlaufender Zugmittelantriebe 44. An einem solchen Ketten- oder Riemenumlauf sind vorzugsweise einer oder mehrere Balken angeordnet, so dass eine zügige Beförderung der Artikellage zwischen den jeweiligen Modulen ermöglicht ist. Die einzelnen Module 12, 14 und 30 können wahlweise über eigene Bandantriebe o. dgl. bewegliche und in Vorschubrichtung 38 oder entgegengesetzt bewegliche und antreibbare Auflageebenen aufweisen, die sich sinnvollerweise jeweils synchron mit den beweglichen Schub- und Anlagebalken bewegen, so dass die Artikelförderung in optimaler Weise unterstützt ist. Die schematische Seitenansicht der Fig. 16 zeigt eine solche Ausführungsvariante, bei der die Schub- und Anlagebalken 18 und 26 aufeinander folgender Module 12, 14 jeweils über endlos umlaufende Zugmittelantriebe 44 bewegt werden, deren Umlaufgeschwindigkeiten in gewünschter Weise variabel sein sollten, um die Bewegungen der Schubbalken 18 und Anlagebalken 26 so steuern zu können, dass die Artikellage 10 entsprechend ihres vorgesehenen Bewegungsverlaufs in Vorschubrichtung 38 zwischen den Modulen 12 und 14 verschoben werden kann. Wie in Fig. 16 dargestellt, können bspw. an jedem der in Pfeilrichtung umlaufenden Bewegungsbahnen der Zumittelantriebe 44 jeweils zwei Schubbalken 18 bzw. zwei Anlagebalken 26 bewegt werden, wodurch der Überschub der Artikellage 10 zwischen den aufeinander folgenden Modulen 12 und 14 in gewünschter Weise gesteuert werden kann.

Die schematische Darstellung der Fig. 17 zeigt eine weitere Ausführungsvariante eines zweiten Moduls 14, das hier als sog. Jalousiegreiferkopf 46 o. dgl. ausgebildet ist und zur Umsetzung der Artikellagen 10 zwischen den angrenzenden Modulen 12 und 30 dienen kann, bspw. zur Umsetzung der Artikellage 10 zwischen dem bspw. als Gruppierstation ausgebildeten ersten Modul 12 und dem bspw. als Stapelplatz ausgebildeten dritten Modul 30. Die Auflageebene des Jalousiegreiferkopfes 46 weist typischerweise bewegliche Elemente 48 auf, wahlweise als horizontal verschiebbare Rollen oder Plattensegmente o. dgl., die zum Absetzen der Artikellage 10 in horizontaler Richtung auseinander gefahren werden können, wobei gleichzeitig die Artikellage 10 seitlich mittels der beiden Schub- bzw. Anlagebalken 18 bzw. 26 gehalten und stabilisiert wird. In der schematischen Seitenansicht der Fig. 17 sind die beiden beweglichen Elemente 48 zusammengefahren und bilden dadurch die Auflageebene zum Tragen der Artikellage 10.

Der in Fig. 17 rechts von der Artikellage 10 angeordnete Anlagebalken 26 kann zudem in der zuvor beschriebenen Weise in horizontaler Richtung verschoben werden, so dass er seine stabilisierende und bremsende Funktion für die Artikel 16 beim Überschub der Artikellage 10 auf das Modul 14 und insbesondere bei deren Verzögerung erfüllen kann, um das Umkippen der in Förderrichtung vorderen Artikel 16 zu verhindern. Der links angeordnete Schubbalken 18 kann zudem entlang eines horizontalen und abschnittsweise vertikalen Verschiebewegs 50 bewegt werden, um einerseits die Artikellage 10 in Vorschubrichtung 38 schieben zu können. Während des Überschubs der Artikellage 10 vom ersten Modul 12 auf das zweite Modul 14 muss der Schubbalken 18 jedoch aus dem Kollisionsbereich mit der Artikellage 10 gebracht werden, weshalb er je nach Bedarf in vertikale Richtung angehoben und damit aus dem Überschubweg gebracht werden kann. Die horizontale und vertikale Verschiebbarkeit des zweiten Moduls 14 bzw. des Jalousiegreiferkopfes 46 ist durch den Doppelpfeil 52 angedeutet.

Neben den gezeigten Anordnungen, Varianten und Bewegungsverläufen für die Module 12, 14 und 30 sowie für die Schub- und Anlagebalken 18, 26, 40, 42 sind weitere Varianten denkbar, die ebenfalls zum gewünschten Ergebnis führen. So können sich die zwei oder mehr parallel zur Förderrichtung der Artikelgruppen oder Artikellagen 10 bewegbaren Schubbalken 18, 27 etc. und/oder Anlagebalken 26, 40 je nach Bedarf innerhalb von definierten Bewegungsräumen bewegen, die sich wahlweise über Schnittstellen zwischen benachbarten Modulen hinweg erstrecken können. So kann sich insbesondere der den Artikeln vorauseilende und als vordere Anlageeinrichtung dienende zweite Schubbalken oder Anlagebalken gemäß einer optionalen Ausführungsvariante in einen zumindest kurzen Förderweg in das Modul hinein bewegen, in das die Artikellage 10 hineingeschoben wird. Dies kann bspw. die erwähnte Hub- und/oder Umsetzeinrichtung bzw. der Jalousiegreiferkopf 46 o. dgl. sein. Dieses Transportmodul muss entsprechend vorbereitet sein, um den zweiten Schub- oder Anlagebalken zumindest kurzzeitig aufzunehmen, bis die überführte Artikellage 10 zum Stillstand gekommen ist und keine Artikel mehr verzögert werden und deshalb kippen oder verrutschen können. Um diesen Bewegungsbereich für den Schub- oder Anlagebalken ermöglichen zu können, kann dieser bzw. seine Führungselemente wahlweise Teil des zweiten Moduls 14, d.h. der Hub- und/oder Umsetzeinrichtung bzw. des Jalousiegreiferkopfes 46, sein. Wahlweise jedoch ist es auch möglich, dass die Führungselemente, welche für den Antrieb und die Bewegungssteuerung des zweiten Schub- bzw. Anlagebalkens verantwortlich sind, zumindest während des Überschubs in dieses zweite Modul hineinreichen, was bspw. durch einen geeigneten Gestänge- oder Linearantrieb o. dgl. erreicht werden kann.

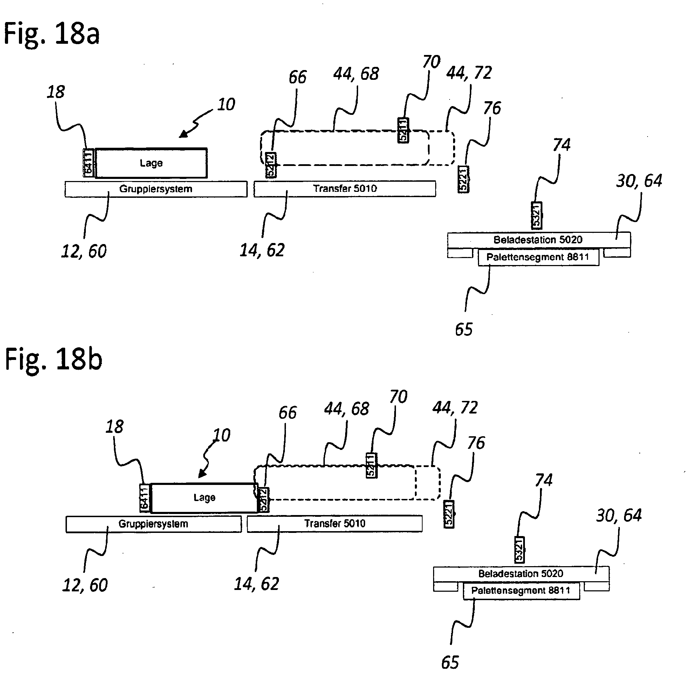

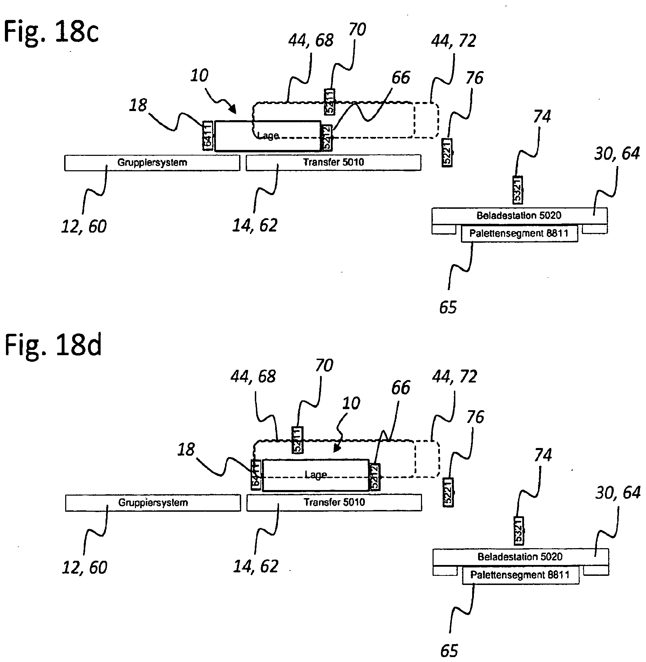

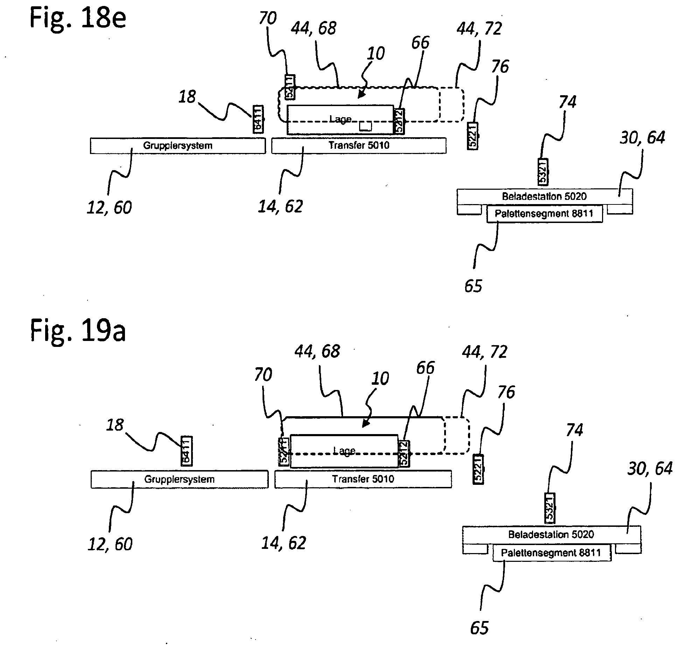

Die schematischen Ansichten der Figuren 18 bis 22 verdeutlichen in insgesamt dreiundzwanzig Einzeldarstellungen ein weiteres Ausführungsbeispiel aufeinander folgender Prozessschritte des Überschubs einer Artikellage 10 zwischen drei benachbarten Modulen 12, 14 und 30. In diesem Ausführungsbeispiel ist das jeweils links dargestellte erste Modul 12 wie in den zuvor erläuterten Ausführungsbeispielen durch ein Gruppiersystem 60 gebildet, das eine Artikellage 10 in vorgegebener Formation von einem hier nicht dargestellten vorgeordneten Sortiersystem übernimmt. Ein solches Sortiersystem kann bspw. einen oder mehrere Handhabungsroboter umfassen, die aus einem oder mehreren Artikelzuläufen geschlossene Artikellagen 10 bilden, die in der dargestellten Weise auf das erste Modul 12 bzw. das Gruppiersystem 60 überführt werden. Das Gruppiersystem 60 muss nicht höhenverstellbar oder seitlich verschiebbar sein, sondern kann ortsfest angeordnet sein, was auch aus den Figuren 18 bis 22 hervorgeht. Wahlweise jedoch kann das Gruppiersystem 60 auch höhenverstellbar ausgebildet sein, insbesondere bei einem optionalen Entfall des dem Gruppiersystem 60 nachgeordneten Transfertischs 62. Bei einer solchen Konfiguration kann das höhenverstellbare Gruppiersystem 60 für einen direkten Überschub der Artikellagen 10 zur Beladestation 64 vorbereitet sein. In diesem Fall sind die normalerweise dem Transfersystem zugeordneten Schubbalken 70 und Anschlagbalken 66 dem Gruppiersystem 60 zuzuordnen und in geeigneter Weise in ihren Bewegungen zu steuern, so dass das Transfersystem entfallen kann, ohne dass Einschränkungen in der Funktion damit verbunden sind.

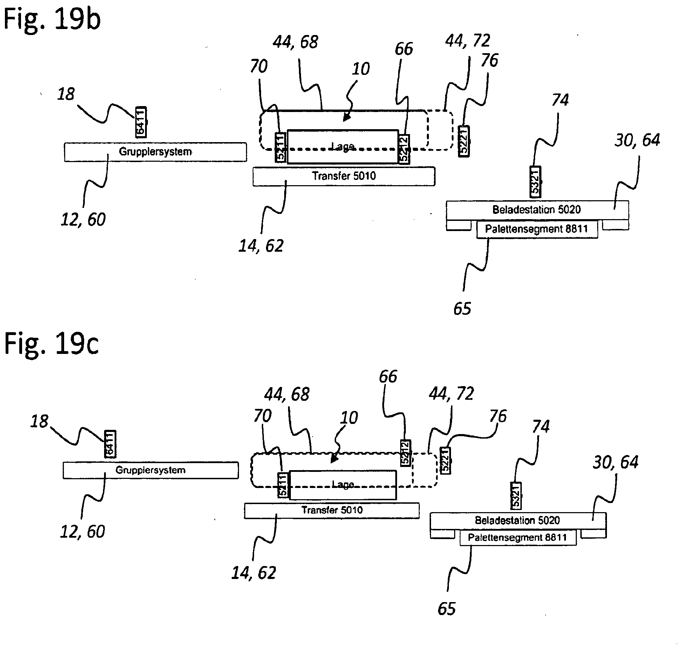

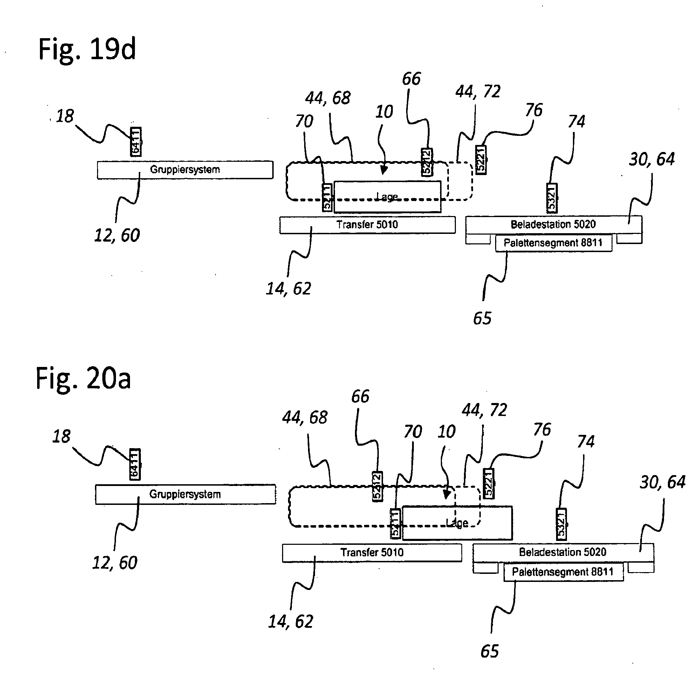

Die Darstellung der Fig. 18a zeigt eine auf dem ersten Modul 12 bzw. dem Gruppiersystem 60 befindliche Artikellage 10, die mittels des horizontal beweglichen ersten Schubbalkens 18 nach rechts auf ein in selber Höhe befindliches zweites Modul 14 verschoben werden kann, wie dies die Fig. 18b verdeutlicht. Das zweite Modul kann bspw. durch einen sog. Transfertisch 62 gebildet sein, der höhenverstellbar ausgebildet ist, um einen Überschub auf eine unterhalb des Gruppiersystems 60 befindliche Beladestation 64 zu ermöglichen. Diese je nach Beladezustand eines darunter angeordneten Palettensegments 65 in der Höhe verstellbare Beladestation 64 bildet im dargestellten Ausführungsbeispiel das dritte Modul 30. Wie es die Figuren 18a bis 18e verdeutlichen, wird die Artikellage 10 mittels des dem ersten Modul 12 zugeordneten ersten Schubbalkens 18 vom ersten Modul 12 bzw. dem Gruppiersystem 60 in horizontaler Richtung nach rechts auf das zweite Modul 14 bzw. den Transfertisch 62 überschoben, wobei ein dem Transfertisch 62 zugeordneter erster Anlagebalken 66 die vorderen Artikel der überschobenen Artikellage 10 stabilisiert und deren Verrutschen oder das Kippen einzelner Artikel verhindert. Der erste Anlagebalken 66 bewegt sich annähernd über die gesamte Länge des zweiten Moduls 14 bzw. des Transfertisches 62, wie dies die Darstellungen der Fig. 18b bis 18e verdeutlichen. Die Fig. 18d zeigt zudem eine Besonderheit dieser Ausführungsvariante, bei welcher der erste Schubbalken 18 über das Gruppiersystem 60 hinaus auf den Rand des Transfertisches 62 geschoben wird, bevor er gemäß Fig. 18e wieder zurückgezogen wird (vgl. Fig. 19), um eine weitere Artikellage 10 vom ersten Modul 12 bzw. vom Gruppiersystem 60 auf das zweite Modul 14 bzw. auf den Transfertisch 62 überschieben zu können.

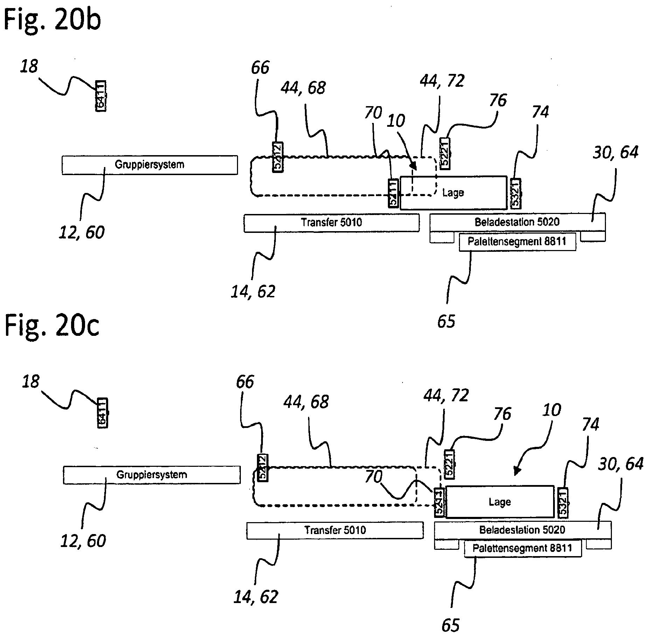

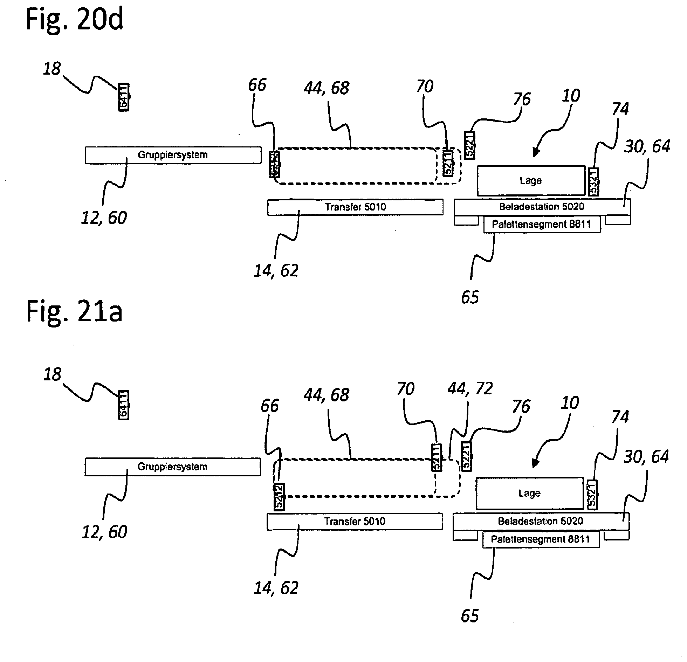

In den Darstellungen der Figuren 18a bis 18e bewegt sich der dem Transfertisch 62 zugeordnete erste Anlagebalken 66 in horizontaler Richtung nach rechts, bis die Artikellage 10 gemäß Fig. 19a und Fig. 19b vollständig auf den Transfertisch 62 bzw. das zweite Modul 14 überschoben ist. Die Fig. 19c verdeutlicht die anschließende Vertikalbewegung des Anlagebalkens 66, der angehoben wird, um die weitere Überführung der Artikellage 10 nicht zu behindern. Der Anlagebalken 66 bewegt sich dabei entlang einer geschlossenen ersten Bewegungsbahn 68, die insbesondere durch einen entsprechenden Zugmittelantrieb 44 vorgegeben sein kann. Die Darstellung der Fig. 19d verdeutlicht die Rückführbewegung des ersten Anlagebalkens 66 oberhalb der Artikellage 10 nach links, die sich entsprechend Fig. 20a und Fig. 20b fortsetzt, bis gemäß Fig. 20c und Fig. 20d die Anfangsposition erreicht ist, in welcher der Anlagebalken 66 zur Stabilisierung einer weiteren überschobenen Artikellage 10 eingesetzt werden kann.

Weiterhin verdeutlichen die Figuren 18a bis 18e die Verschiebung eines dem Transfertisch 62 zugeordneten weiteren Schubbalkens 70 oberhalb der Artikellage 10 entlang einer zweiten Bewegungsbahn 72, die sich zwar über weite Abschnitte mit der ersten Bewegungsbahn 68 überdecken kann, jedoch über einen von dieser unabhängigen weiteren Zugmittelantrieb 44 verfügt, da ein abschnittsweise von der ersten Bewegungsbahn 68 abweichender Bewegungsverlauf erforderlich ist. So verdeutlichen die Figuren 20b, 20c und 20d einen Verschiebeweg des weiteren Schubbalkens 70, der über die Länge des Transfertisches 62 hinausreicht und teilweise in den Bereich der Beladestation 64 des dritten Moduls 30 hineinreicht. Dieser erweiterte Verschiebeweg des weiteren Schubbalkens 70 ermöglicht einen Überschub der Artikellage 10 in einem Zug vom zweiten Modul 14 auf das dritte Modul 30, ohne dass eine Unterbrechung der Überschubbewegung erforderlich ist.

Während des weiteren Überschiebens der Artikellage 10 auf dem Transfertisch 62 mittels des weiteren Schubbalkens 70 und des die Artikellage 10 stabilisierenden ersten Anlagebalkens 66 wird der Transfertisch 62 soweit abgesenkt (vgl. Figuren 19b bis 19d), bis das tiefer liegende Niveau der Beladestation 64 erreicht ist (Fig. 19d), so dass die Artikellage 10 mittels des weiteren Schubbalkens 70 (Fig. 19d) nach rechts auf die Beladestation 64 überschoben werden kann (vgl. Figuren 20a bis 20c). Ein dieser Beladestation 64 zugeordneter zweiter Anlagebalken 74, der zumindest abschnittsweise annähernd synchron mit dem weiteren Schubbalken 70 nach rechts bewegt wird und dabei der Artikellage 10 vorauseilt, sorgt dort für die Stabilisierung der Artikellage 10 und verhindert das Umfallen oder Verrutschen einzelner Artikel. Nach Kontaktierung der Artikellage (Fig. 20b) eilt er der Artikellage 10 bei deren Überschubbewegung nach rechts voraus (Fig. 20c), bis der weitere Schubbalken 70 seine Überschubbewegung beendet hat und entlang der zweiten Bewegungsbahn 72 im Bereich der Beladestation 64 vertikal nach oben gefahren wird (Fig. 20d).

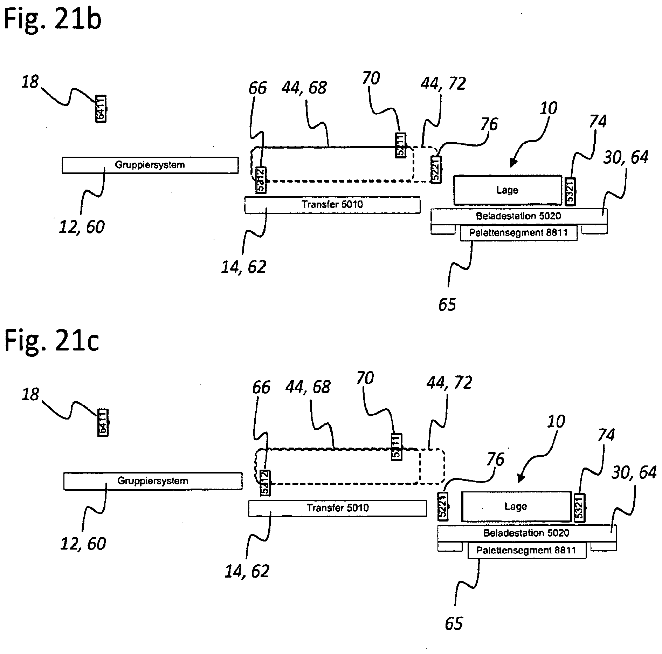

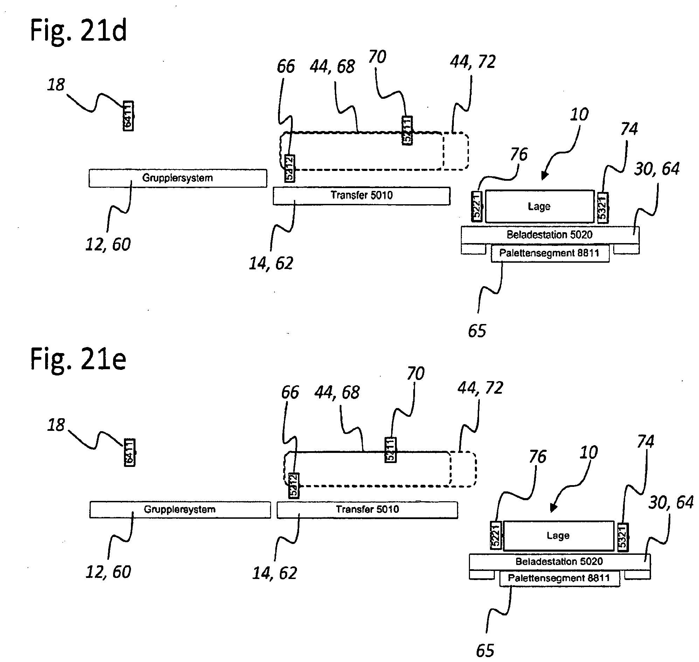

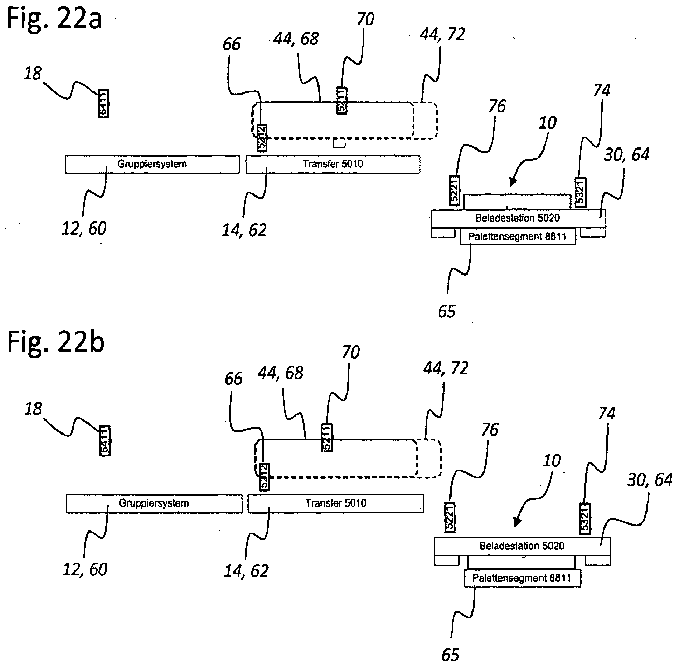

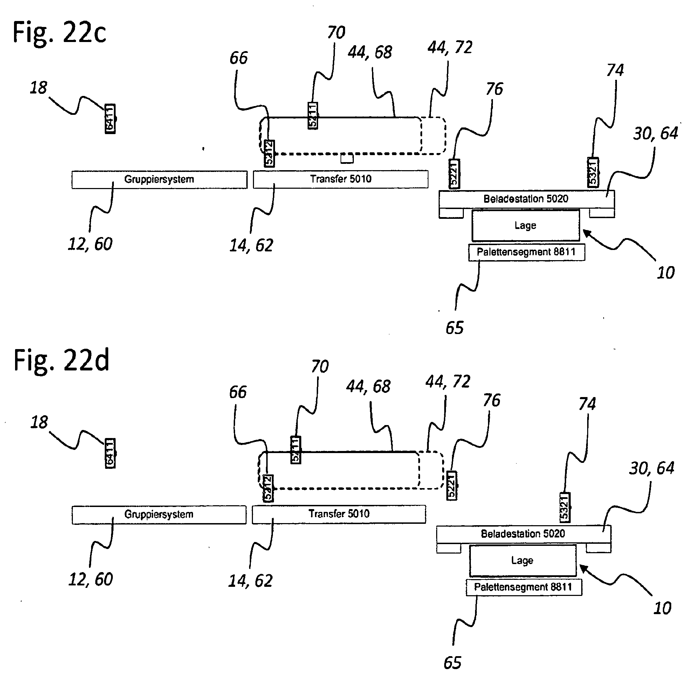

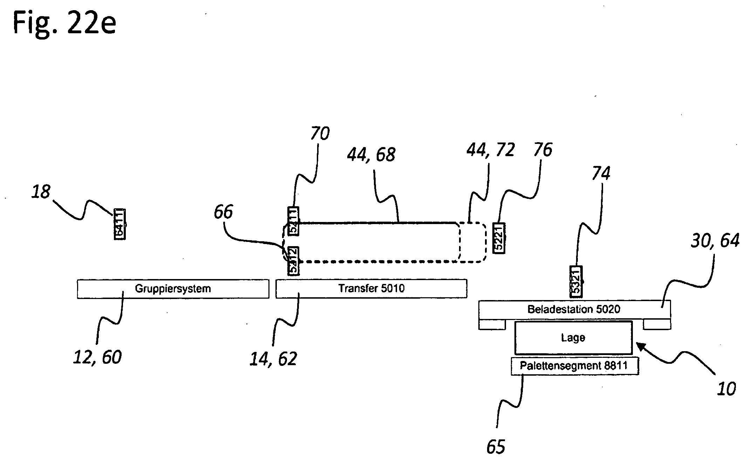

Während der Transfertisch 62 nach der Übergabe der Artikellage 10 auf die Beladestation 64 wieder vertikal nach oben gefahren werden kann (Fig. 21a, Fig. 21 b), senkt sich ein der Beladestation 64 zugeordneter dritter Schubbalken 76 vertikal nach unten (Fig. 21 b) bis auf das Niveau der Artikellage 10 (Fig. 21 c) und wird anschließend nach rechts verschoben (Fig. 21 d), um die Artikellage 10 auf der Beladestation 64 zu zentrieren (Fig. 21 e), wobei gleichzeitig der zweite Anlagebalken 74 für die Stabilisierung der Artikellage 10 sorgt. Nach der richtigen Platzierung der Artikellage 10 (vgl. Fig.21 e) wird diese nach unten auf das Palettensegment 66 abgesenkt (Fig. 22a), wonach die Beladestation 64 wieder nach oben gehoben wird (Fig. 22b, Fig. 22c). Eine solche Übergabe der Artikellage 10 kann bspw. mittels eines Jalousie- oder Plattengreiferkopfes realisiert werden, der eine komplette Artikellage 10 nach unten durch Öffnen oder seitliches Verschieben seines verschiebbaren Bodens abladen kann.

Währenddessen bewegt sich der dem Transfertisch 62 zugeordnete weitere Schubbalken 70 wieder entlang der zweiten Bewegungsbahn 72 zum Ausgangspunkt nach links zurück, wobei er während der Rückführbewegung oberhalb des Niveaus der Artikellage 10 bewegt wird, so dass er nicht mit einer solchen kollidieren kann. Der zweite Anlagebalken 74 der Beladestation 64 wird zudem wieder in horizontale Richtung nach links bewegt (Fig. 22c), um eine weitere Artikellage 10 stabilisieren zu können, während der dritte Schubbalken 76 vertikal nach oben bewegt wird (Fig. 22d), um eine darunter beförderte Artikellage 10 passieren zu lassen.

Es sei an dieser Stelle erwähnt, dass auch andere Bewegungsverläufe und Kombinationen der in den Figuren 18 bis 22 gezeigten Überschubbewegungen mit gleichen oder ähnlichen zusammenwirkenden Modulen 12, 14 und 30 möglich sind, ohne dass das Prinzip der Überschubbewegung von geschlossenen Artikellagen 10 dabei grundlegend verändert wird. Darüber hinaus sei betont, dass der gezeigte Bewegungsverlauf des Transfertischs 62 vom höher liegenden Gruppiersystem 60 zur tiefer liegenden Beladestation 64 keineswegs einschränkend, sondern nur beispielhaft zu verstehen ist. So können sich auf dem Stapelplatz des Palettensegments 65 nach mehreren Überschubvorgängen mehrere übereinander gestapelte Artikellagen 10 befinden, so dass es notwendig sein kann, eine weitere Artikellage 10 nach der Übernahme vom Gruppiersystem 60 durch Anheben des Transfertischs 62 zur Beladestation 64 zu überführen. In diesem - hier nicht dargestellten - Fall wird der Transfertisch 62 nicht entsprechend Fig. 19b, Fig. 19c und Fig. 19d mit der darauf befindlichen Artikellage 10 auf das Niveau der Beladestation 64 abgesenkt, sondern ggf. auf ein Niveau einer dort zuoberst liegenden Artikellage 10 angehoben.

Eine weitere, hier jedoch nicht dargestellte Variante des Stapelverfahrens kann wahlweise vorsehen, dass auf der Beladestation 64 mehrere Artikellagen 10 gleichzeitig abgelegt werden. Durch die gleichzeitige Handhabung und Stapelung mehrerer Artikellagen 10 können die Palettenwechselzeiten deutlich reduziert werden. Hierdurch fungiert die Beladestation 64 als eine Art Zwischenspeicher, wodurch die erforderlichen Zeiten für einen Palettenwechsel minimiert werden können.

Wie oben erwähnt, kann eine weitere - hier nicht dargestellte - Variante lediglich das Gruppiersystem 60 und die Beladestation 64 umfassen, wobei das Gruppiersystem 60 höhenverstellbar ausgeführt sein muss, um die unterschiedlichen Höhenniveaus der auf der Beladestation 64 befindlichen Stapeln mit Artikellagen 10 ausgleichen zu können.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Artikellage, Artikelgruppe
- 12: erstes Modul
- 14: zweites Modul
- 16: Artikel, Gebinde, Behälter
- 17: seitliche Führung
- 18: Schubbalken
- 20: Vorschubbewegung
- 22: Schiebebewegung (Schubbalken)
- 24: Auflageebene
- 26: Anlagebalken
- 27: Schubbalken
- 28: Schiebebewegung (Anlagebalken)
- 30: drittes Modul
- 32: Gruppiertisch
- 34: Aufzug
- 36: Stapelplatz
- 38: Vorschubrichtung
- 40: Anlagebalken
- 42: weiterer Schubbalken
- 44: Zugmittelantrieb
- 46: Jalousiegreiferkopf
- 48: bewegliche Elemente
- 50: Verschiebeweg (Schubbalken)
- 52: Verschiebeweg (zweites Modul)
- 60: Gruppiersystem
- 62: Transfertisch
- 64: Beladestation
- 65: Palettensegment
- 66: erster Anlagebalken
- 68: erste Bewegungsbahn
- 70: weiterer Schubbalken
- 72: zweite Bewegungsbahn
- 74: zweiter Anlagebalken
- 76: dritter Schubbalken

## Patentansprüche

1. Verfahren zur horizontalen Verschiebung einer Artikelgruppe oder Artikellage (10) aus einer ersten Lage und/oder aus einer Förderbewegung heraus unter weitgehender Beibehaltung der Relativpositionen einer die Artikelgruppe oder -lage (10) bildenden Mehrzahl von Artikeln (16) relativ zueinander mittels wenigstens eines an den, in Bezug auf die Förder- bzw. Vorschubbewegung (38) rückseits der Artikelgruppe oder Artikellage (10) angreifenden ersten Schubbalkens (18) in eine zweite Ruhelage, wobei ein temporär den in Förderrichtung (38) frontseitig befindlichen Artikeln (16) zugeordneter, mit dem rückseitig angreifenden Schubbalken (18) bewegungsgekoppelter Anlagebalken (26) der Artikelgruppe oder -lage (10) kurz vor oder bei Erreichen der Ruhelage, zumindest in einer definierten Phase am Ende der Überschubbewegung mit geringem Abstand zu den vordersten Artikeln (16) vorauseilt.

2. Verfahren nach Anspruch 1, bei dem der Schubbalken (18) und der Anlagebalken (26) zumindest temporär annähernd synchrone Bewegungen ausführen.

3. Verfahren nach einem der Ansprüche 1 bis 2, bei dem die Artikellage (10) zwischen benachbarten Modulen (12, 14, 30) überschoben wird, insbesondere zwischen einem Gruppiertisch (32), einem Aufzug (34) und/oder einem Stapelplatz (36), die jeweils unterschiedliche und/oder variable Höhenniveaus aufweisen können.

4. Verfahren nach einem der Ansprüche 1 bis 3 zur Palettierung oder Depalettierung von Artikelgruppen oder Artikellagen (10), die entlang eines Überschubweges mittels wenigstens eines zumindest abschnittsweise annähernd horizontal entlang des und parallel zum Überschubweg beweglichen und an einer Rückseite der Artikellage (10) angreifenden ersten Schubbalkens (18) zwischen benachbarten Förder- und/oder Handhabungsstationen (12, 14, 30) geschoben und/oder überführt werden.

5. Verfahren nach einem der Ansprüche 1 bis 4, bei dem ein Lagenbild und/oder eine räumliche Anordnung der Artikel (16) der Artikellage (10) zueinander während jeder Überführung zwischen benachbarten Modulen (12, 14, 30) beibehalten werden.

6. Verfahren nach einem der Ansprüche 1 bis 5, bei dem die Schub- und/oder Anlagebalken (18, 26, 27, 40, 42) jeweils einzelnen Modulen (12, 14, 30) zugeordnet sind und/oder in benachbarte Module (12, 14, 30) hineinreichen können.

7. Vorrichtung zur horizontalen Verschiebung einer Artikelgruppe oder Artikellage (10) zwischen wenigstens zwei benachbarten Modulen (12, 14, 30) unter weitgehender Beibehaltung der Relativpositionen einer die Artikelgruppe oder -lage (10) bildenden Mehrzahl von Artikel (16) relativ zueinander, umfassend wenigstens einen an den Artikeln (16) angreifenden Schubbalken (18, 27, 42) zum horizontalen Verschieben der Artikellage (10) auf ein benachbartes Modul (14, 30) sowie wenigstens einen frontseitig der Artikellage (10) angreifenden Anlagebalken (26, 40), der in seiner Bewegung in Überschubrichtung zumindest temporär mit dem Schubbalken (18) gekoppelt ist, wobei der mit dem rückseitig angreifenden Schubbalken (18) bewegungsgekoppelte Anlagebalken (26) zumindest in einer definierten Phase am Ende der Überschubbewegung in einen geringen Abstand zur Vorderseite gebracht wird und der Artikelgruppe oder Artikellage (10) gering beabstandet vorauseilt.

8. Vorrichtung nach Anspruch 7, bei der ein erstes Modul (12) durch einen Gruppiertisch (32) gebildet ist und/oder bei dem ein zweites Modul (14) durch einen Aufzug (34) und/oder einen Jalousiegreiferkopf (46) gebildet ist und/oder bei dem ein drittes Modul (30) durch einen Stapelplatz (36) zum Ablegen mehrere Artikellagen (10) übereinander gebildet ist.

9. Vorrichtung nach Anspruch 7 oder 8, bei der zumindest einer der Schubbalken (18, 27, 42) und/oder wenigstens einer der Anlagebalken (26, 40) mit einem endlos umlaufenden Zugmittelantrieb (44) zur Herstellung der Schubbewegungen gekoppelt ist.

## Claims

1. Method for horizontally displacing an article group or article layer (10) from a first position and/or from a conveying movement, while largely maintaining the relative positions of a plurality of articles (16) forming the article group or layer (10) relative to one another, by means of at least one first push bar (18), which engages with at the rear of the article group or article layer (10) with respect to the conveying or advancing movement (38), into a second idle position, wherein an abutment bar (26) which is temporarily associated with the articles (16) located at the front in the conveying direction (38) and is motion-coupled to the rear-engaging push bar (18) runs ahead of the article group or layer (10) at a short distance from the foremost articles (16) shortly before or when the idle position is reached, at least in a defined phase at the end of the transfer movement.

2. Method according to claim 1, wherein the push bar (18) and the abutment bar (26) perform approximately synchronous movements, at least temporarily.

3. Method according to either claim 1 or claim 2, wherein the article layer (10) is transferred between adjacent modules (12, 14, 30), in particular between a grouping table (32), a hoist (34) and/or a stacking location (36), which can each have different and/or variable height levels.

4. Method according to any of claims 1 to 3 for palletising or depalletising article groups or article layers (10) which are pushed and/or transferred along a transfer path by means of at least one first push bar (18), which is at least partially movable approximately horizontally along and parallel to the transfer path and engages at a rear side of the article layer (10), between adjacent conveying and/or handling stations (12, 14, 30).

5. Method according to any of claims 1 to 4, wherein a layer pattern and/or a spatial arrangement of the articles (16) of the article layer (10) with respect to one another are maintained during each transfer between adjacent modules (12, 14, 30).

6. Method according to any of claims 1 to 5, wherein the push and/or abutment bars (18, 26, 27, 40, 42) are each associated with individual modules (12, 14, 30) and/or can reach into adjacent modules (12, 14, 30).

7. Device for horizontally displacing an article group or article layer (10) between at least two adjacent modules (12, 14, 30) while largely maintaining the relative positions of a plurality of articles (16) forming the article group or layer (10) relative to one another, comprising at least one push bar (18, 27, 42) which engages with the articles (16) for horizontally displacing the article layer (10) onto an adjacent module (14, 30) and at least one abutment bar (26, 40) which engages with the front of the article layer (10) and is at least temporarily coupled to the push bar (18) in its movement in the transfer direction, wherein the abutment bar (26), which is motion-coupled to the rear-engaging push bar (18), is brought to a short distance from the front side at least in a defined phase at the end of the transfer movement and runs ahead of the article group or article layer (10) at a short distance.

8. Device according to claim 7, wherein a first module (12) is formed by a grouping table (32) and/or wherein a second module (14) is formed by a hoist (34) and/or a shutter gripper head (46) and/or wherein a third module (30) is formed by a stacking location (36) for storing multiple article layers (10) one on top of the other.

9. Device according to either claim 7 or claim 8, wherein at least one of the push bars (18, 27, 42) and/or at least one of the abutment bars (26, 40) is coupled to an endlessly rotating traction drive (44) for producing the pushing movements.

## Revendications

1. Procédé pour déplacer horizontalement un groupe d'articles ou une couche d'articles (10) à partir d'une première position et/ou d'un mouvement de transport tout en conservant dans une large mesure les positions relatives d'une pluralité d'articles (16) formant le groupe d'articles ou la couche d'articles (10) les uns par rapport aux autres au moyen d'au moins une première poutre de poussée (18) venant en prise à l'arrière, par rapport au mouvement de transport ou d'avancée (38), du groupe d'articles ou de la couche d'articles (10) jusqu'à une seconde position de repos, dans lequel une poutre de butée (26), temporairement associée aux articles (16) situés du côté avant dans la direction de transport (38) et couplée cinétiquement à la poutre de poussée (18) venant en prise à l'arrière, précède le groupe d'articles ou la couche d'articles (10) peu avant que la position de repos soit atteinte ou lorsque celle-ci est atteinte, au moins dans une phase définie à la fin du mouvement de charriage et à une faible distance des articles (16) situés les plus en avant.

2. Procédé selon la revendication 1, dans lequel la poutre de poussée (18) et la poutre de butée (26) exécutent au moins temporairement des mouvements approximativement synchrones.

3. Procédé selon l'une quelconque des revendications 1 à 2, dans lequel la couche d'articles (10) est charriée entre des modules (12, 14, 30) adjacents, en particulier entre une table de regroupement (32), un élévateur (34) et/ou un emplacement d'empilage (36), qui peuvent présenter respectivement des niveaux de hauteur différents et/ou variables.

4. Procédé selon l'une quelconque des revendications 1 à 3 pour palettiser ou dépalettiser des groupes d'articles ou des couches d'articles (10) qui sont poussé(e)s et/ou transféré(e)s entre des postes de transport et/ou de manutention (12, 14, 30) adjacents le long d'un trajet de charriage au moyen d'au moins une première poutre de poussée (18) venant en prise à l'arrière de la couche d'articles (10) et mobile au moins par sections de manière approximativement horizontale le long du trajet de charriage et parallèlement à celui-ci.

5. Procédé selon l'une quelconque des revendications 1 à 4, dans lequel un aspect de couche et/ou un agencement spatial des articles (16) de la couche d'articles (10) les uns par rapport aux autre est/sont conservé(s) lors de chaque transfert entre des modules (12, 14, 30) adjacents.

6. Procédé selon l'une quelconque des revendications 1 à 5, dans lequel les poutres de poussée et/ou de butée (18, 26, 27, 40, 42) sont respectivement associées à des modules (12, 14, 30) individuels et/ou peuvent s'étendre jusqu'à des modules (12, 14, 30) adjacents.

7. Dispositif pour déplacer horizontalement un groupe d'articles ou une couche d'articles (10) entre au moins deux modules (12, 14, 30) adjacents tout en conservant dans une large mesure les positions relatives d'une pluralité d'articles (16) formant le groupe d'articles ou la couche d'articles (10) les uns par rapport aux autres, comprenant au moins une poutre de poussée (18, 27, 42) venant en prise au niveau des articles (16) afin de déplacer horizontalement la couche d'articles (10) sur un module (14, 30) adjacent et au moins une poutre de butée (26, 40) venant en prise à l'avant de la couche d'articles (10) et qui, dans son mouvement dans la direction de charriage, est couplée au moins temporairement à la poutre de poussée (18), dans lequel la poutre de butée (26) couplée à la poutre de poussée (18) venant en prise à l'arrière est placée à une faible distance du côté avant au moins dans une phase définie à la fin du mouvement de charriage et précède le groupe d'articles ou la couche d'articles (10) à une faible distance.

8. Dispositif selon la revendication 7, dans lequel un premier module (12) est formé par une table de regroupement (32) et/ou dans lequel un deuxième module (14) est formé par un élévateur (34) et/ou une tête de préhension à jalousie (46) et/ou dans lequel un troisième module (30) est formé par un emplacement d'empilement (36) permettant de déposer plusieurs couches d'articles (10) les unes au-dessus des autres.

9. Dispositif selon la revendication 7 ou 8, dans lequel au moins une des poutres de poussée (18, 27, 42) et/ou au moins une des poutres de butée (26, 40) est/sont couplée(s) à un entraînement de matériel de traction (44) tournant sans fin afin de produire les mouvements de poussée.
